# EUROPEAN PATENT APPLICATION

(11) **EP 1 724 660 A1**
(43) Date of publication of application: **22.11.2006**
(21) Application number: 05257589.1
(22) Date of filing: 09.12.2005
(51) Int. Cl.: G06F 1/20, G06F 1/18, G11B 33/12, G11B 33/14, H05K 7/14

(54) **Disk array device**

(30) Priority: 27.04.2005 JP 2005130214
(71) Applicant: Hitachi, Ltd., Tokyo (JP)
(72) Inventor: Nishiyama, Shinichi, c/o Hitachi, Ltd., Chiyoda-ku Tokyo 100-8220 (JP); Maeda, Tadaharu, c/o Hitachi, Ltd., Chiyoda-ku Tokyo 100-8220 (JP)
(74) Representative: Hodsdon, Stephen James

(57) **Abstract**

Provided are a disk array device (1, 40, 90, 110, 120) capable of reducing the manufacture load and management load of a logical board, and a disk array device capable of performing efficient cooling. Specifically, the former disk array device has a number of second logical boards constituted by functionally dividing in plural a first logical board (19) having formed thereon a circuit for controlling the input and output of data; and a case (10) for housing each of the second logical boards. This case houses each of the second logical boards so as to be arranged in a direction perpendicular to the insertion direction of the second logical boards into the case and the thickness direction of the second logical boards. The latter disk array device (120) has a case (122) for housing each of the logical boards (19) so as to be arranged in the thickness direction of the logical board, and first and second cooling fans disposed respectively at the back end and front end of the case. The first and second cooling fans (131, 132) are disposed on both ends of a direction perpendicular to both the insertion direction of the logical board into the case and the thickness direction of the logical board so as to sandwich the logical board housed in the case.

## Description

This application relates to and claims priority from Japanese Patent Application No. 2005-130214, filed on April 27, 2005, the entire disclosure of which is incorporated herein by reference.

The present invention relates to a disk array device preferably used in both rack type and cabinet type disk array devices.

Conventionally, as a disk array device, there is a rack type disk array device in which various modules such as a disk drive module storing a plurality of disk drives and a logical module storing a plurality of logical boards for controlling the input and output of data between the host system and disk drive are housed in a versatile case, and there is a cabinet type disk array device in which various modules such as the disk drive module and logical module are stored in a special case.

Among the above, a rack type disk array device, which is an installation format primarily for midrange disk array devices, is configured such that each of the modules can be divided into the smallest units as much as possible and housed in the rack frame, and, when giving consideration to the degree of freedom regarding the disposition of the respective modules, it is desirable to make every module have the same height to the utmost extent.

In order to meet such demand, conventionally, a proposal has been made to make the height and width of the disk drive module housing unit and the logical module housing unit for storing various logical boards approximately the same size (Japanese Patent Laid-Open Publication No. 2005-11405).

Incidentally, with a conventional disk array device, the board size of the logical board used in a rack type disk array device and the board size of the logical board used in a cabinet type disk array device are different, and there is a problem in that a significant load would arise in having to manufacture and manage these separately.

Meanwhile, while the disk drive module and logical module are housed from both the front side and back side of the case with a cabinet type disk array device, with a rack type disk array device, ordinarily, the disk drive module and logical module are housed from only one side of the case (rack frame).

Thus, with a rack type disk array device, as a cooling structure for cooling the inside of the disk array device by externally discharging the heat generated in the disk drive module or logical module, there are cases where the cooling structure adopted in a cabinet type disk array device cannot be used in a rack type disk array device.

In such a case, it is desirable to use a cooling structure capable of efficiently cooling the inside of the disk array device in consideration of the structure unique to the rack type disk array device.

The present invention was devised in view of the foregoing problems, and an object thereof is to provide a disk array device capable of reducing the manufacture load and management load of a logical board, and another object thereof is to provide a disk array device capable of performing efficient cooling.

One aspect of the present invention for preferably achieving the foregoing objects is a disk array device, having: a plurality of second logical boards constituted by functionally dividing in plural a first logical board having formed thereon a circuit for controlling the input and output of data; and a case for housing each of the second logical boards; wherein the case houses each of the second logical boards constituted by functionally dividing the first logical board so as to be arranged in a direction perpendicular to the insertion direction of the second logical boards into the case and the thickness direction of the second logical boards. Thereby, according to this disk array device, a logical board capable of being commonly used in a rack type disk array device and a cabinet type disk array device can be obtained.

Another aspect of the present invention is a disk array device, having: a logical board having formed thereon a circuit for controlling the input and output of data; a case for housing each of the logical boards so as to be arranged in the thickness direction of the logical board; a first cooling fan for exhaust or intake provided to the back end of the insertion direction of the logical board farther than the mounting position of the logical board in the case; and a second cooling fan for intake or exhaust provided to the front end of the insertion direction of the logical board farther than the mounting position of the logical board in the case; wherein the first and second cooling fans are disposed on both ends of a direction perpendicular to both the insertion direction of the logical board into the case and the thickness direction of the logical board so as to sandwich the logical board housed in the case. As a result, with this disk array device, cooling air can be flowed in a Z shape in the case from the first cooling fan toward the second cooling fan, or from the second cooling fan toward the first cooling fan.

A further aspect of the present invention is also a disk array device, having: a plurality of second logical boards constituted by functionally dividing in plural a first logical board having formed thereon a circuit for controlling the input and output of data; a case for housing each of the second logical boards so as to be arranged in the thickness direction of the second logical board; a push/pull lever provided only to one corner at the back end side of the second logical board in relation to its insertion direction into the case and which is to be operated upon inserting and removing the second logical board to and from the case; a first cooling fan for exhaust or intake provided to the back end of the insertion direction of the second logical board farther than the mounting position of the logical board in the case; and a second cooling fan for intake or exhaust provided to the front end of the insertion direction of the second logical board farther than the mounting position of the logical board in the case; wherein the first and second cooling fans are disposed on both ends of a direction perpendicular to both the insertion direction of the second logical board into the case and the thickness direction of the second logical board so as to sandwich the logical board housed in the case. As a result, with this disk array device, a logical board capable of being commonly used in a rack type disk array device and a cabinet type disk array device can be obtained, and, in addition, cooling air can be flowed in a Z shape in the case from the first cooling fan toward the second cooling fan, or from the second cooling fan toward the first cooling fan.

According to aspects of the present invention, since a logical board capable of being commonly used in a rack type disk array device and a cabinet type disk array device can be obtained, the load arising as a result of independently manufacturing and managing the respective types of logical boards can be reduced. Further, in the above aspects, since the case may house each of the second logical boards constituted from functionally dividing a first logical board so as to be arranged in the direction perpendicular to the insertion direction of the second logical board into the case, the deterioration in performance of the first logical board resulting from being divided into a plurality of second logical boards may be effectively reduced or prevented.

According to the aspects of the present invention, cooling air can be flowed in a Z shape in the case from the first cooling fan toward the second cooling fan, or from the second cooling fan toward the first cooling fan. Therefore, the logical board can be cooled efficiently without being interfered with a so-called backboard disposed inside the case.

In the Figures:
FIG. 1 is a perspective view showing a panoramic configuration of a cabinet type disk array device according to the first embodiment;
FIG. 2 is an exploded perspective view showing a panoramic configuration of a cabinet type disk array device according to the first embodiment;
FIG. 3 is a front view showing a panoramic configuration of a control device in a cabinet type disk array device according to the first embodiment;
FIG. 4(A) is a perspective view showing a panoramic configuration of a rack type disk array device according to the first embodiment;
FIG. 4(B) is a perspective view showing a panoramic configuration of a rack type disk array device according to the first embodiment;
FIG. 5(A) is an exploded perspective view showing a panoramic configuration of a rack type disk array device according to the first embodiment;
FIG. 5(B) is an exploded perspective view showing a panoramic configuration of a rack type disk array device according to the first embodiment;
FIG. 6 is a block diagram showing an internal configuration of a cabinet type disk array device;
FIG. 7 is a block diagram showing an internal configuration of a rack type disk array device;
FIG. 8 is a block diagram showing a wiring configuration of a logical module in a cabinet type disk array device;
FIG. 9 is a block diagram showing a wiring configuration of a logical module in a rack type disk array device;
FIG. 10 is a schematic front view showing an installation configuration of a logical board in a rack type disk array device;
FIG. 11 is a schematic front view showing an installation configuration of a logical board in a cabinet type disk array device;
FIG. 12 is a schematic front view showing a modified example of an installation configuration of a logical board in a cabinet type disk array device;
FIG. 13 is a schematic front view showing a modified example of an installation configuration of a logical board in a cabinet type disk array device;
FIG. 14 is a schematic front view showing a modified example of an installation configuration of a logical board in a cabinet type disk array device;
FIG. 15(A) is a schematic front view showing a modified example of an installation configuration of a logical board in a cabinet type disk array device;
FIG. 15(B) is a schematic front view showing a modified example of an installation configuration of a logical board in a cabinet type disk array device;
FIG. 16 is an exploded perspective view explaining a mounting configuration of a logical board in a logical module;
FIG. 17(A) is a side view explaining a mounting configuration of a logical board in a logical module;
FIG. 17(B) is a side view explaining a mounting configuration of a logical board in a logical module;
FIG. 17(C) is a side view explaining a mounting configuration of a logical board in a logical module;
FIG. 18 is a side view explaining a mounting configuration of a logical board in a logical module;
FIG. 19 is a side view explaining a mounting configuration of a logical board in a logical module;
FIG. 20 is a perspective view showing a panoramic configuration of a cabinet type disk array device according to the second embodiment;
FIG. 21 is an exploded perspective view showing a panoramic configuration of a cabinet type disk array device according to the second embodiment;
FIG. 22 is a front view showing a panoramic configuration of a cabinet type disk array device according to the second embodiment;
FIG. 23 is an exploded perspective view explaining a mounting configuration of a logical board in a logical module of a cabinet type disk array device according to the second embodiment;
FIG. 24(A) is a side view explaining a mounting configuration of a logical board in a logical module of a cabinet type disk array device according to the second embodiment;
FIG. 24(B) is a side view explaining a mounting configuration of a logical board in a logical module of a cabinet type disk array device according to the second embodiment;
FIG. 25(A) is a perspective view showing a panoramic configuration of a rack type disk array device according to the second embodiment;
FIG. 25(B) is a perspective view showing a panoramic configuration of a rack type disk array device according to the second embodiment;
FIG. 26(A) is an exploded perspective view showing a panoramic configuration of a rack type disk array device according to the second embodiment;
FIG. 26(B) is an exploded perspective view showing a panoramic configuration of a rack type disk array device according to the second embodiment;
FIG. 27 is an exploded perspective view for explaining a mounting configuration of a logical board in a logical module of a rack type disk array device according to the second embodiment;
FIG. 28 is a side view explaining a mounting configuration of a logical board in a logical module of a rack type disk array device according to the second embodiment;
FIG. 29 is a perspective side view explaining a guiding pin hole and a guiding pin;
FIG. 30(A) is a perspective view showing a panoramic configuration of a rack type disk array device according to the second embodiment;
FIG. 30(B) is a perspective view showing a panoramic configuration of a rack type disk array device according to the second embodiment;
FIG. 31 (A) is an exploded perspective view showing a panoramic configuration of a rack type disk array device according to the second embodiment;
FIG. 31 (B) is an exploded perspective view showing a panoramic configuration of a rack type disk array device according to the second embodiment;
FIG. 32 is a side view explaining a cooling mechanism in a cabinet type disk array device;
FIG. 33 is a side view explaining a cooling mechanism in a logical module of a rack type disk array device according to the third embodiment;
FIG. 34 is an exploded perspective view explaining a push/pull lever in a rack type disk array device according to the third embodiment;
FIG. 35 is a side view explaining a push/pull lever in a rack type disk array device according to the third embodiment; and

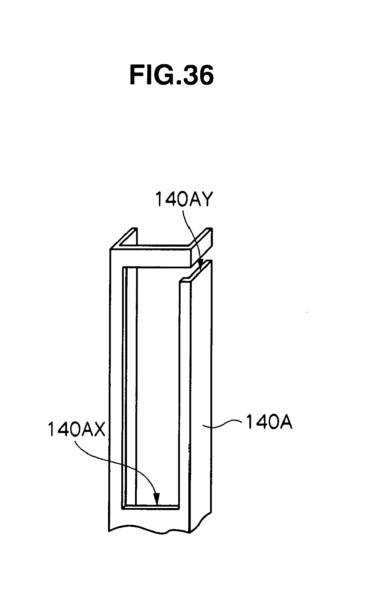

FIG. 36 is a schematic perspective view explaining a push/pull lever in a rack type disk array device according to the third embodiment.

Embodiments of the present invention are now described in detail with reference to the attached drawings.

### (1) First Embodiment

### (1-1) Panoramic Configuration

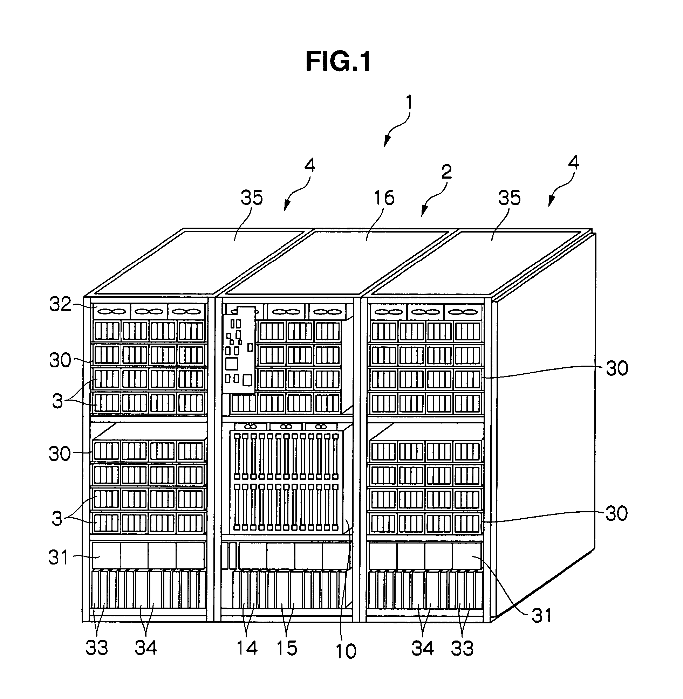

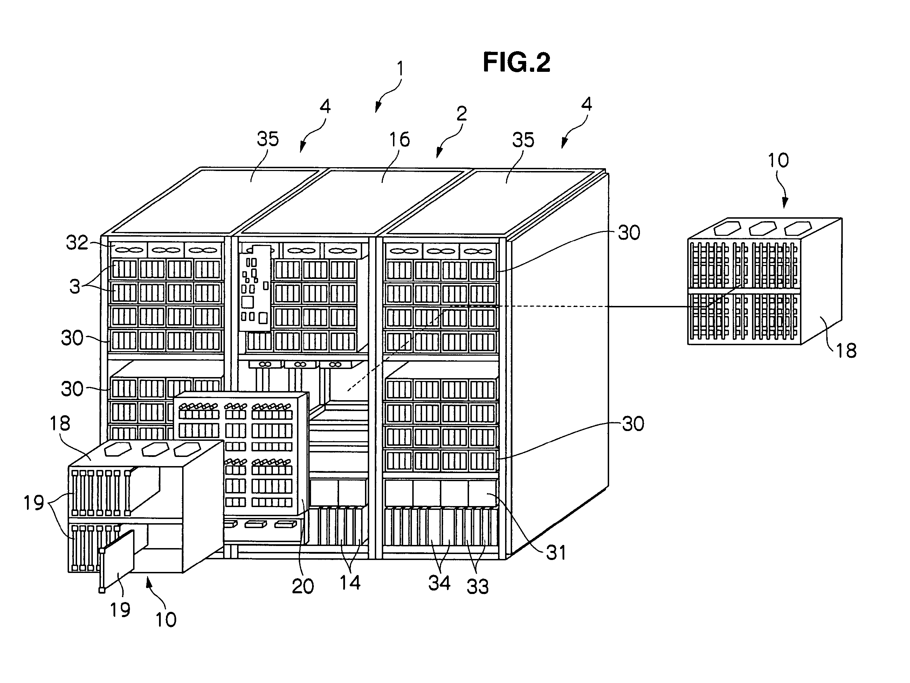

FIG. 1 and FIG. 2 are diagrams showing a cabinet type disk array device 1 according to the first embodiment. The cabinet type disk array device 1 of the present embodiment is configured from a control device 2 responsible for controlling the overall operation of the disk array device 1, and a driver 4 housing a plurality of disk drives 3. In the example illustrated in FIG. 1 and FIG. 2, the control device 2 is arranged in the center, and the drivers 4 are disposed at the left and right sides thereof.

The control device 2 is constituted by housing a logical module 10, a disk drive module 11, a power source module 12, a cooling fan 13, a battery 14 and an AC-BOX 15 in a control device case 16, respectively. Further, provided to the control device 2 is an operator panel 17 to be operated by the operator in charge of the maintenance management of the disk array device 1.

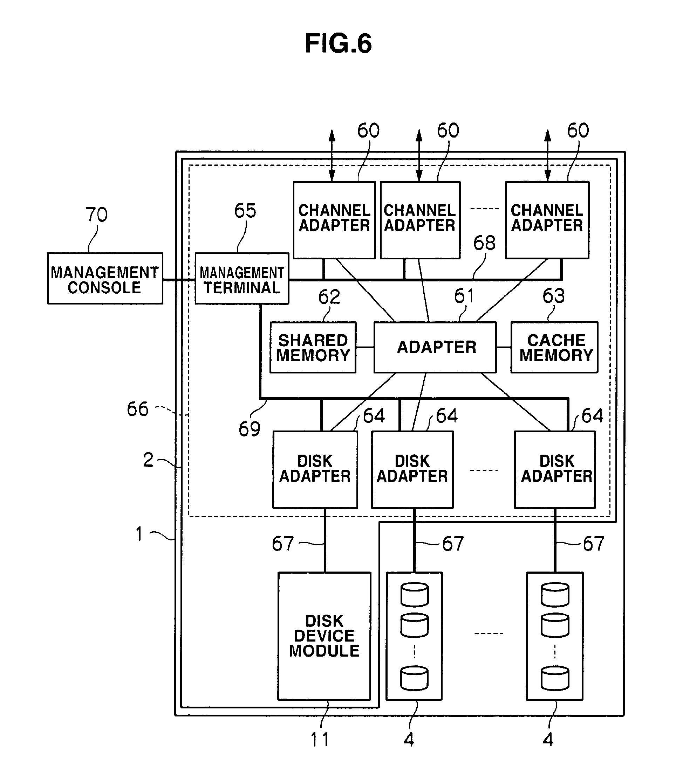

The logical module 10 is constituted by a plurality of logical boards 19 for controlling the input and output of data between the host system (not shown) and the driver 4 being loaded inside the logical module case 18. As the logical boards 19 to be loaded inside the logical module case 18, for instance, there are a channel adapter 60 (FIG. 6) described later for communicating with the host system, and a disk adapter 64 (FIG. 6) described later for controlling the input and output of data to and from the disk drive 3. These logical boards 19 are connected to a backboard 20 (FIG. 2) disposed inside the controller case, respectively.

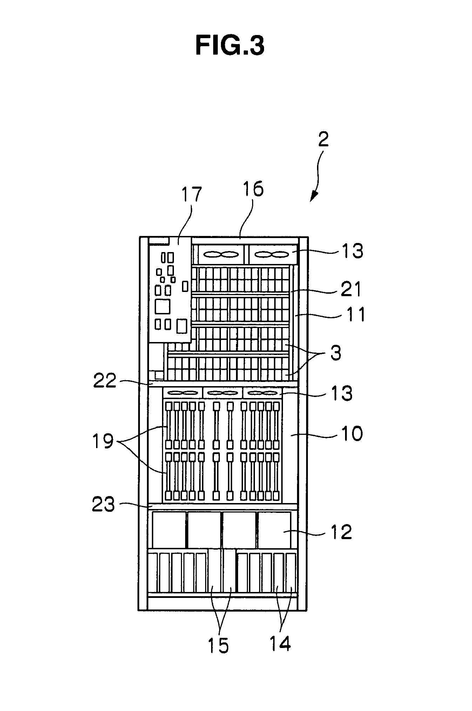

The disk drive module 11 is constituted by a plurality of disk drives 3 being aligned and housed inside a disk drive module case 21. In the example illustrated in FIG. 1 to FIG. 3, the disk drives 3 are housed by being stacked in four rows. Each disk drive 3 has a build-in disk as a recording medium.

The AC-BOX 15 is the intake of the AC power in relation to the disk array device 1, and functions as a breaker. The AC power taken in by the AC-BOX 15 is supplied to the power source module 12. The power source module 12 converts the AC power source provided from the AC-BOX 15 into a DC power source, and supplies this DC power to the logical module 10, disk drive module 11 and the respective cooling fans 13.

The cooling fan 13 externally discharges the air inside the control device 2. Thereby, the heat generated in the logical module 10, disk drive module 11 and power source module 12 can be discharged outside the control device 2. The battery 14 is used as the standby power supply for supplying power to the respective parts inside the control device 2 upon an electric power failure or abnormality of the power source module 12.

The control device case 16 is partitioned into three sections; namely, an upper deck, middle deck and lower deck, by the upper partition 22 and lower partition 23. In the case of the present embodiment, the disk drive module 11 and cooling fan 13 are housed in the upper deck of the control device case 16, the logical module 10 and the cooling fan 13 of such logical module 10 are housed in the middle deck, and the AC-BOX 15, battery 12 and power source module 14 are housed in the lower deck.

With the cabinet type disk array device 1, the logical module 10, disk drive module 11, power source module 12, cooling fan 13, battery 14 and AC-BOX 15 are housed in the control device case 16 not only from the front side, but also similarly from the back side.

The driver 4 is configured by the disk drive module 30, power source module 31, cooling fan 32, battery 33 and AC-BOX 34 being respectively housed, detachably, in the driver case 35. Each of these components has the same configuration and function as the disk drive module 11, power source module 12, cooling fan 13, battery 14 or AC-BOX 15 in the control device 2.

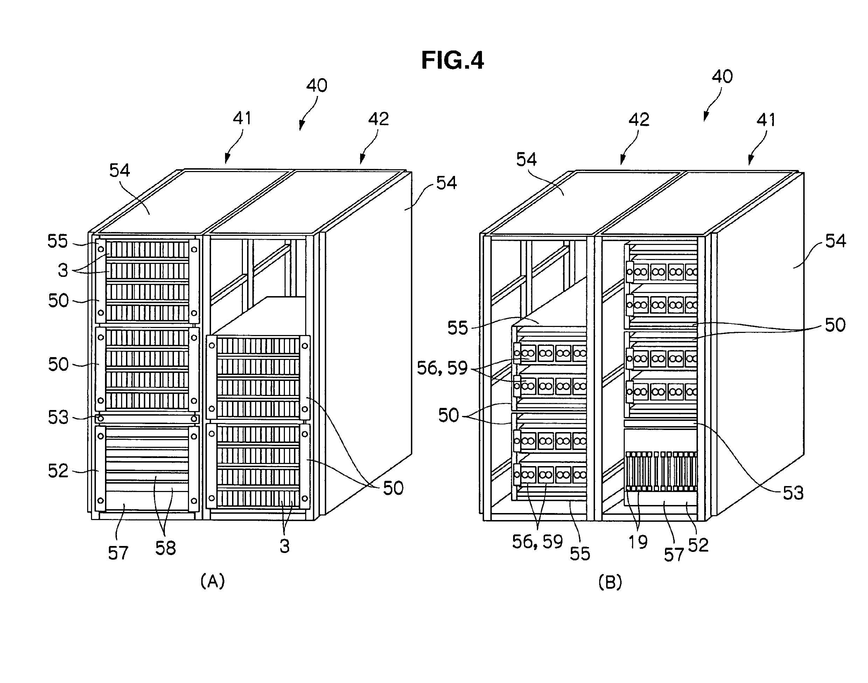

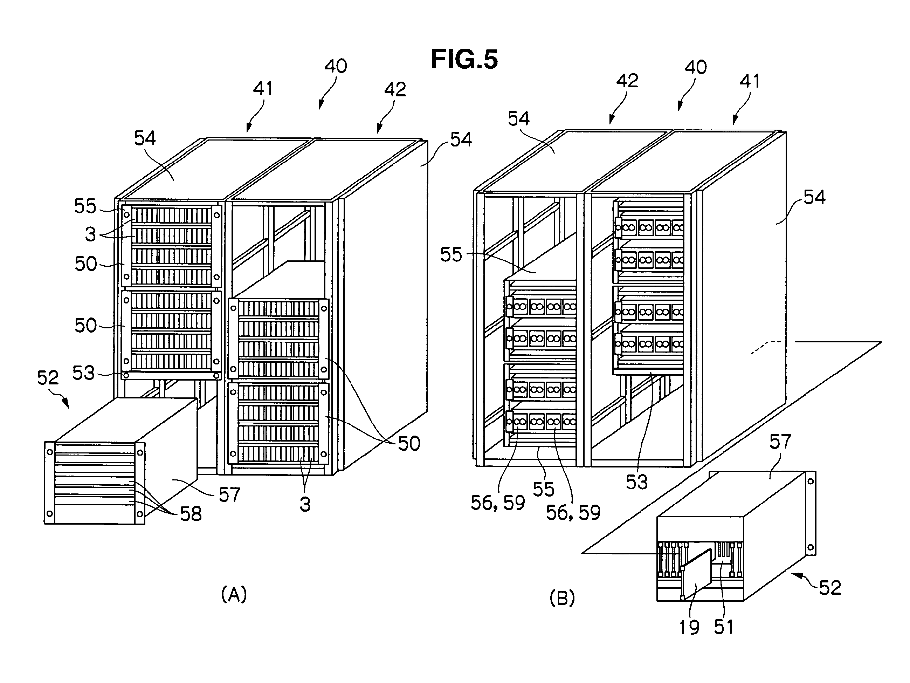

Meanwhile, FIG. 4 and FIG. 5 show a rack type disk array device 40 according to the first embodiment. FIG. 4(A) and FIG. 5(A) are front views of the disk array device 40, and FIG. 4(B) and FIG. 5(B) are rear views of the disk array device 40.

In the case of this embodiment, the disk array device 40 is configured from a basic configuration unit 41 and an expansion unit 42. The basic configuration unit 41 is configured by a disk drive module 50 housing a plurality of disk drives 3, a logical module 52 housing a plurality of logical boards 19 for controlling the disk array device 40, and a control module 53 housing a control board having a control circuit formed thereon being housed in a rack frame 54, respectively. The disk drive module 50, logical module 52 and control module 53 are each fixed to the rack frame 54 with screws.

In each of the disk drive modules 50, a plurality of disk drives 3 is aligned and housed at the front side of the disk drive module case 55, and a power source unit 56 and cooling fan 59 are housed at the back side of the disk drive module case 55. In the example illustrated in FIG. 4 and FIG. 5, the disk drives 3 are housed by being stacked in four rows.

With the logical module 52, a backboard 51 is fixed to the back end thereof, and, in addition to a plurality of logical boards 19 and a power source unit (not shown) being housed from the back side of the logical module case 57, a plurality of batteries 58 is housed from the front side. This battery 58 is also used as the standby power supply for supplying power to the respective parts inside the disk array device 40 upon an electric power failure or abnormality of the power source unit.

Further, the expansion unit 42 is configured by a plurality of disk drive modules 50, in which a plurality of disk drives 3 is respectively aligned and housed therein, being housed in the rack frame 54. Each of these disk drive modules 50 is also fixed to the rack frame 54 with screws.

Here, with a conventional rack type disk array device, in light of the size of the logical board to be housed in the logical module, the logical module is formed larger than the disk drive module. Nevertheless, when giving consideration to the degree of freedom of the logical module and disk drive module in the rack frame, it is desirable to make the logical module and disk drive module to be of the same height to the extent possible.

Thus, in this embodiment, giving consideration to the fact that two circuits of the channel adapter 60 (FIG. 6) and two circuits of the disk adapter 64 (FIG. 6) described later are formed in a conventional logical board, this logical board is functionally divided into halves such that one of these circuits is formed on a single substrate, and the board area is formed in half the size of the original logical board such that each of the logical boards 19 to be housed in the logical modules 10 (FIG. 1 to FIG. 3), 52 (FIG. 4, FIG. 5) will become half the height of the conventional logical board. As a result, by forming the logical module 52 to be the same height as the disk drive module 50 as shown in FIG. 4 and FIG. 5, the degree of freedom in the rack type disk array device 40 is improved thereby.

Meanwhile, when considering the common use of the logical board 19 in both the cabinet type disk array device 1 and rack type disk array device 40, in a cabinet type disk array device, which is primarily the mounting format of a high end disk array device, it is necessary to maintain the mounting density of the logical board 19 in the logical module 10 (FIG. 1 to FIG. 3) at the same level as with conventional models in order to maintain the performance at the same level as with conventional models. Further, in order to maintain the performance at the same level as with conventional models, and in order to reduce the influence on the wiring structure of the backboard, it is also important to succeed the conventional cabinet type structure as much as possible.

Thus, with the cabinet type disk array device 1 according to the present embodiment, as shown in FIG. 1 to FIG. 3, as a result of functionally dividing a conventional logical board in halves and arranging two logical boards 19, in which the board area is approximately half of the original logical board, so that one is on top of the other (in a direction perpendicular to the insertion direction of the logical board 19 into the logical module case 57 and the thickness direction of the logical board 19), the total value of the board area and the mounting structure and mounting density of the logical board 19 can be maintained to be roughly the same level as conventional models, and these two logical boards 19 are able to maintain the performance at the same level as with conventional models.

### (1-2) Internal Configuration of Disk Array Device

FIG. 6 shows the internal configuration of the cabinet type disk array device 1 having the foregoing configuration. As evident from FIG. 6, the cabinet type disk array device 1 is constituted from a control device 2 and a plurality of drivers 4 as described above. Among the above, the control device 2 has a control unit 66 including a plurality of channel adapters 60, an adapter 61, a shared memory 62, a cache memory 63, a plurality of disk adapters 64 and a management terminal 65.

Each of the channel adapters 60 is constituted as a microcomputer system including a microprocessor, memory, communication interface and so on, respectively, and has a port to be connected to the likes of a network. The channel adapter 60 interprets and executes various commands transmitted from the host system via a network, for example. The port of each channel adapter 60 is assigned a network address (e.g., IP address or WWN) for identifying each of such ports, and, thereby, each of the channel adapters 60 is able to individually act as a NAS (Network Attached Storage).

The adapter 61 is connected to the channel adapter 60, shared memory 62, cache memory 63 and disk adapter 64. The transfer of data and command among the channel adapter 60, shared memory 62, cache memory 63 and disk adapter 64 is conducted via this adapter 61. The adapter 61, for instance, is constituted from a switch or bus such as an ultrahigh-speed crossbar switch which performs data transmission via high-speed switching.

The shared memory 62 and cache memory 63 are storage memories to be shared by the channel adapter 60 and disk adapter 64. The shared memory 62 is primarily used for storing control information and commands, and the cache memory 63 is primarily used for temporarily storing data to be input to and output from the disk drive module 30 in the control device 2 and the driver 4.

Each of the disk adapters 64 is configured as a microcomputer system having the likes of a microprocessor and memory, and functions as an interface for performing protocol control upon communicating with the disk drive module 30 in the control device 2 and the driver 4. These disk adapters 64 are connected to the respective drivers 4 via the fiber channel cable 67, for instance, and perform the transfer of data between these disk drivers 4 according the fibre channel protocol.

The management terminal 65 is used for controlling the overall operation of the disk array device 1 and, for example, is constituted from the likes of a laptop personal computer. The management terminal 65 is connected to the respective channel adapters 60 via the LAN 68, and connected to the respective disk adapters 64 via the LAN 69. The management terminal 65 monitors the occurrence of failures in the disk array device 1, and, when a failure occurs, it displays such failure by notifying an external management console 70, and performs processing for designating the inhibition of the disk unit 3 based on the order provided from the management console 70 according to the operator's operation.

Each driver 4 is constituted from the likes of a plurality of disk units 3 and a power source unit 33 (FIG. 1, FIG. 2). Each disk unit 3 is constituted, for instance, by having a built-in expensive disk drive such as a SCSI (Small Computer System Interface) disk, or an inexpensive disk device such as a SATA (Serial AT Attachment) disk or optical disk. The disk device in each disk unit 3 is operated in RAID format with the management terminal 65 in the control device 2. One or a plurality of logical volumes (this is hereinafter referred to as a "logical volume") is set on the physical memory area provided by one or a plurality of disk devices. This data is stored in the logical volume.

The flow of input and output of data in the cabinet type disk array device 1 having the foregoing configuration is now explained. When the channel adapter 60 receives a data write request from the host system, it writes a write command in the shared memory 62, and writes data to be written, which is transmitted from the host system together with the data write request, in the cache memory 63.

Here, the disk adapter 64 is constantly monitoring the shared memory 62, and, when the disk adapter 64 detects that a write command has been written in the shared memory 62, it converts the data write request based on a logical address designation into a data write request based on a physical address designation, and transmits this to the disk module 11 in the control device 2 or to the corresponding driver 4. Further, the disk adapter 64 reads data to be written from the cache memory 63 according to the write command written in the shared memory 62, and transmits this to the disk module 11 in the control device 2 or to the corresponding driver 4.

As a result, according to this data write request, data to be written is written in an address location designated in the disk device housed in the corresponding disk drive 3 in the disk drive module 11 of the control device 2, or the corresponding disk drive 3 in the driver 4.

Contrarily, when a data read request is provided from the host system, the channel adapter 60 writes the corresponding read command in the shared memory 62. Further, when the disk adapter 64 detects that a read command has been written in the shared memory 62, it converts the data read request based on a logical address designation into a data read request based on a physical address designation, and transmits this to the disk module 11 in the control device 2 or to the corresponding driver 4.

As a result, according to this data read request, corresponding data is read from the corresponding disk drive 3. This read data (this is hereinafter referred to as "read data") is transmitted to the disk adapter 64.

The disk adapter 64 that received the read data writes a read command in the shared memory 62, and writes such read data in the cache memory 63. Meanwhile, the channel adapter 60 is constantly monitoring the shared memory 62, and, when the channel adapter 60 detects that a read command has been written in the shared memory 62, it reads the read data from the cache memory 63 according to this read command, and transmits this to the corresponding host system.

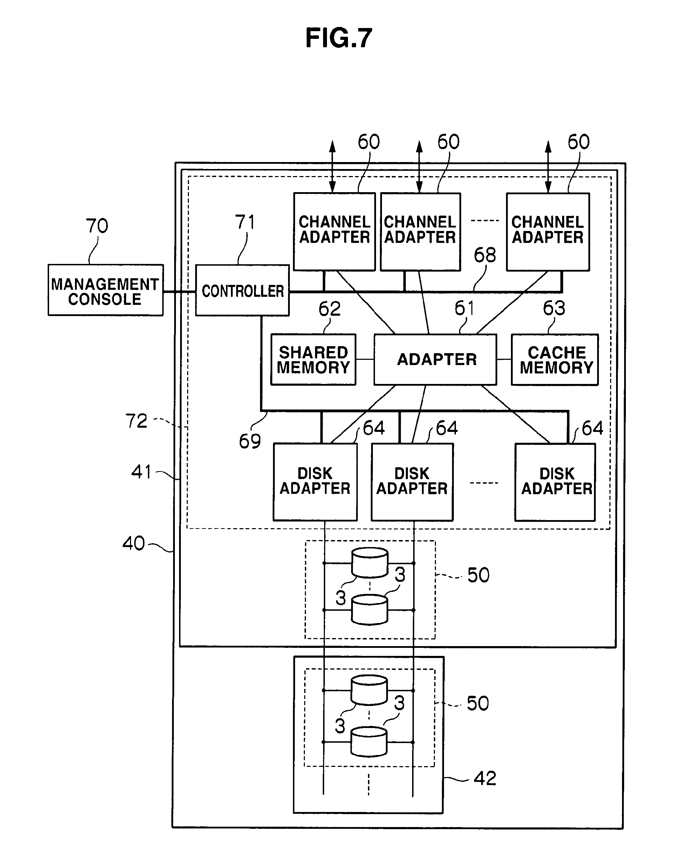

Meanwhile, FIG. 7 shows the internal configuration of the rack type disk array device 40. The rack type disk array device 40 is configured from a basic configuration unit 41 and an expansion unit 42 as described above. Among the above, the basic configuration unit 41, as shown in FIG. 7, has a control unit 72 including a plurality of channel adapters 60, an adapter 61, a shared memory 62, a cache memory 63, a plurality of disk adapters 64 and a controller 71 in the control module 53. The controller 71 has the same functions as the management terminal 65 of the cabinet type disk array device 1 described with reference to FIG. 6.

The respective disk drives 3 housed in the disk drive module 50 of the basic configuration unit 41 and the respective disk drives 3 housed in the disk drive module 50 of the expansion unit 42, as shown in FIG. 7, are connected to two disk adapters 64 to yield redundancy. Thereby, even when one of the disk adapters 64 malfunctions, the other disk adapter 64 can be used to access each of the disk drives 3. The input and output of data in this disk array device 40 is conducted in the same manner as with the input and output of data in the cabinet type disk array device 1.

### (1-3) Configuration of Logical Module

### (1-3-1) Specific Wiring Configuration in Logical Module

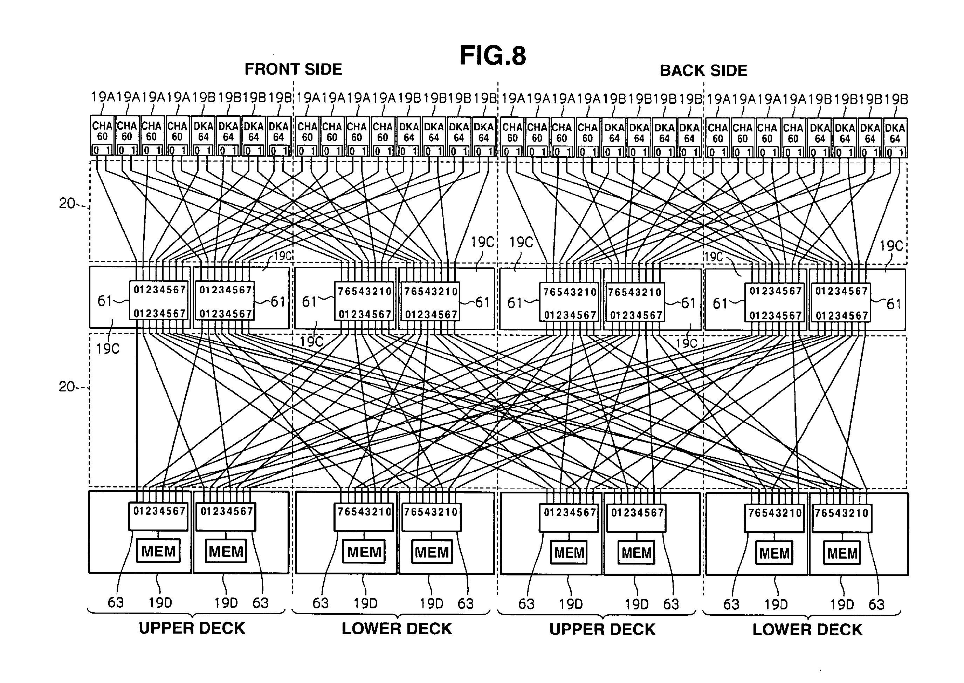

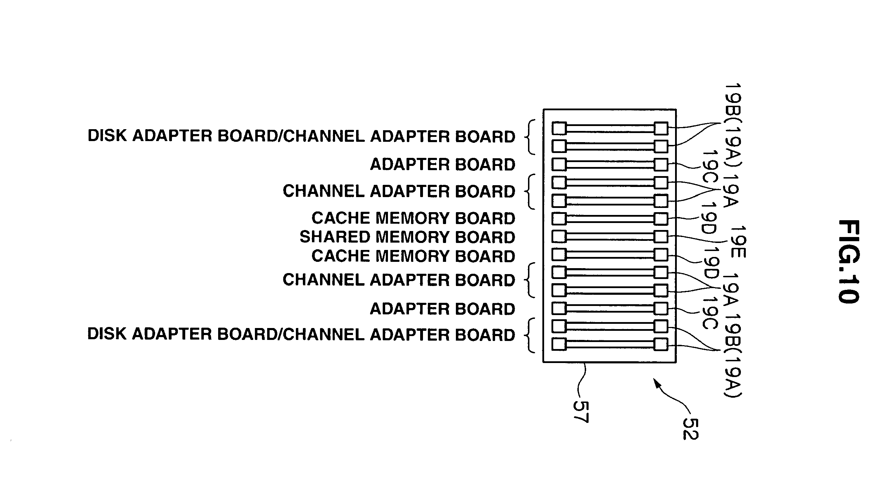

FIG. 8 shows the specific wiring configuration of the respective logical boards 19 in the logical module 10 of the cabinet type disk array device 1. The logical module 10 of this disk array device 1 houses, as the logical boards 19, a disk adapter board 19A having a disk adapter 60 formed thereon, a channel adapter board 19B having a channel adapter 64 formed thereon, an adapter board 19C having an adapter 61 formed thereon, a cache memory board 19D having a cache memory 63 formed thereon, and a shared memory board 19E (c.f. FIG. 10) having a shared memory 62 formed thereon. In FIG. 8, the shared memory board 19E has been omitted.

With this cabinet type disk array device 1, the upper deck and lower deck of a single logical module 10 respectively house four channel adapter boards 19A and four disk adapter board 19B, two adapter boards 19C and two cache memory boards 19D, and one shared memory board 19E. Incidentally, the four disk adapter boards 19B may be partially substituted with the channel adapter boards 19A.

In the case of the cabinet type disk array device 1, as evident from FIG. 8, the channel adapters 60 formed on half of the channel adapter boards 19A among the respective channel adapter boards 19A installed in the logical module case 18 (FIG. 2) are respectively connected, via the backboard 20, to the adapter 61 formed on one adapter board 19C installed in the upper deck of the logical module case 18 and to the adapter 61 formed on one adapter board 19C installed in the lower deck of the logical module case 18, and the channel adapters 60 formed on the remaining half of the channel adapter boards 19A are respectively connected, via the backboard 20, to the adapter 61 formed on the other adapter board 19C installed in the upper deck of the logical module case 18 and to the adapter 61 formed on the other adapter board 19C installed in the lower deck of the logical module case 18.

Similarly, the disk adapters 64 formed on half of the disk adapter boards 19B among the respective disk adapter boards 19B installed in the logical module case 18 (FIG. 2) are respectively connected, via the backboard 20, to the adapter 61 formed on one adapter board 19C installed in the upper deck of the logical module case 18 and to the adapter 61 formed on one adapter board 19C installed in the lower deck of the logical module case 18, and the disk adapters 64 formed on the remaining half of the disk adapter boards 19B are respectively connected, via the backboard 20, to the adapter 61 formed on the other adapter board 19C installed in the upper deck of the logical module case 18 and the adapter 61 formed on the other adapter board 19C installed in the lower deck of the logical module case 18.

Each adapter 61 formed on each adapter board 19C is connected to every cache memory 63 in the respective logical modules 10 (FIG. 1) disposed at the front side and back side. Thereby, with this disk array device 1, the host system connected to the channel adapter 60 is able to access every disk drive 3 connected to the disk adapter 64.

With the disk array device 1 having the foregoing configuration, when there is a problem with one of the logical boards 19, particularly one of the adapter boards 19C, only half the influence will be exerted in comparison to when there is trouble with one of the adapter boards of the original size before being divided into two, and the influence on the performance of the disk array device 1 caused by the partial failure of the logical board 19 can be reduced.

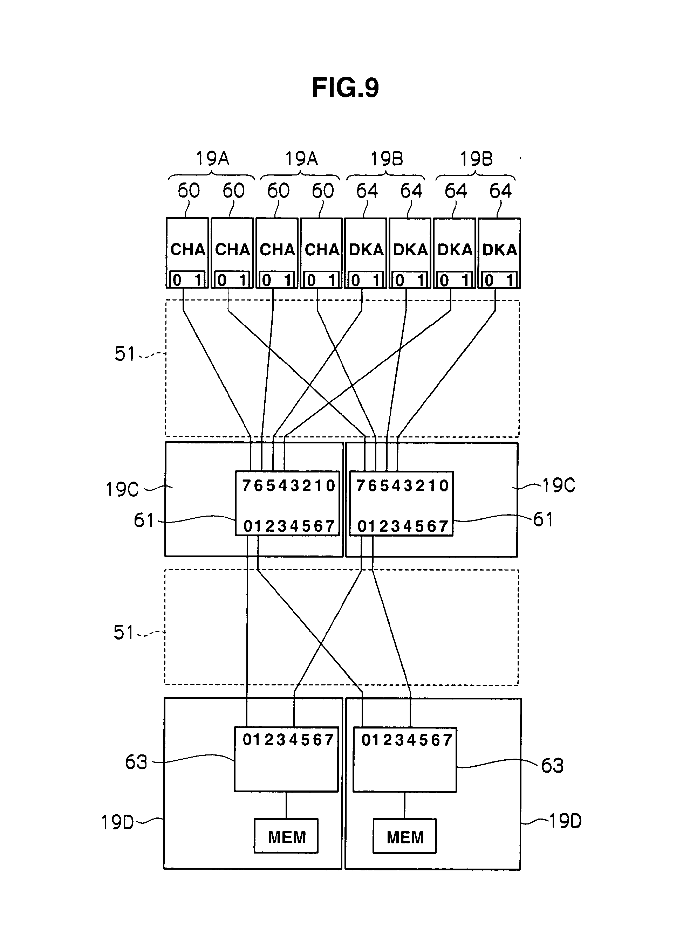

Meanwhile, FIG. 9 shows the specific wiring configuration of the respective logical boards 19 in the logical module 52 of the rack type disk array device 40. In the case of this disk array device 40 also, the logical module 52 houses, as the logical boards 19, a disk adapter board 19A, a channel adapter board 19B, an adapter board 19C, a cache memory board 19D and a shared memory board 19E (c.f. FIG. 10). In FIG. 9 also, the shared memory board 19E has been omitted.

With this rack type disk array device 40, a single logical module 10 houses four channel adapter boards 19A and four disk adapter boards 19B, two adapter boards 19C and cache memory boards 19D, and one shared memory board 19E. Incidentally, with this disk array device 40 also, the four disk adapter boards 19B may be partially substituted with the channel adapter boards 19A.

In the case of the rack type disk array device 40, as evident from FIG. 9, the channel adapters 60 formed on half of the channel adapter boards 19A among the respective channel adapter boards 19A installed in the logical module case 57 (FIG. 5) are respectively connected, via the backboard 51, to the adapter 61 formed on one adapter board 19C installed in the logical module case 57 (FIG. 5), and the channel adapters 60 formed on the remaining half of the channel adapter boards 19A are respectively connected, via the backboard 51, to the adapter 61 formed on the other adapter board 19C installed in the logical module case 57.

Further, each adapter 61 formed on each adapter board 19C is connected to each cache memory 63 formed on two cache memory boards 19D installed in the logical module case 57. Thereby, with this disk array device 40, the host system connected to the channel adapter 60 is able to access every disk drive 3 connected to the disk adapter 64.

With this disk array device 40 having the foregoing configuration also, when there is a problem with one of the logical boards 19, particularly one of the adapter boards 19C, only half the influence will be exerted in comparison to when there is trouble with one of the adapter boards of the original size before being divided into two, and the influence on the performance of the disk array device 40 caused by the partial failure of the logical board 19 can be reduced.

### (1-3-2) Installation Configuration of Logical Board in Logical Module

FIG. 10 shows the installation configuration of the respective logical boards 19 in the logical module of the rack type disk array device 40. In the case of this embodiment, as the logical boards 19 to be housed in the logical module 52, as described above, there are a channel adapter board 19A, disk adapter board 19B, adapter board 19C, cache memory board 19D and shared memory board 19E.

Among the above, a connection port is provided to the front edge (this is hereinafter referred to as the "sub edge") of the channel adapter board 19A, disk adapter board 19B and adapter board 19C, and a cable for connecting the host system and expansion case or network is drawn from this connection port. Contrarily, a connection port is not provided to the cache memory board 19D and shared memory board 19E, and no cable will be drawn from the cache memory board 19D and shared memory board 19E.

Thus, with the logical module 52 of the rack type disk array device 40, as shown in FIG. 10, in addition to the cache memory boards 19D sandwiching a single shared memory board 19E and being disposed at the center of the logical module case 57 (FIG. 5), the channel adapter board 19A, adapter board 19C and disk adapter board 19B (or channel adapter board 19A) are respectively installed in this order at the left and right sides of such cache memory boards 19D. Thereby, with this disk array device 40, the cables to be drawn from the sub edge side of the channel adapter board 19A, disk adapter board 19B and adapter board 19C can be distributed to the left and right sides of the logical module case 57, and the crossing or overlapping of these cables can be effectively prevented.

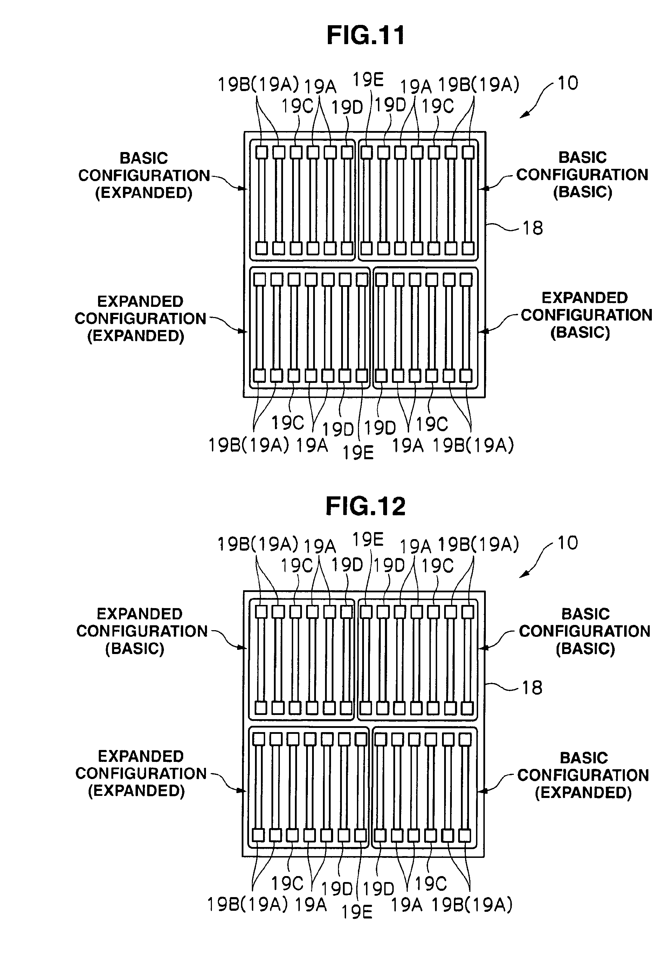

Meanwhile, FIG. 11 shows the installation configuration of the respective logical boards 19 in the logical module 10 of the cabinet type disk array device 1. With the cabinet type disk array device 1, as shown in FIG. 11, the set of four channel adapter boards 19A and four disk adapter boards 19B, two adapter boards 19C and cache memory boards 19D, and one shared memory board 19E is made to be the basic board configuration of the logical board 19 in the logical module 10.

Further, with the disk array device 1, among the above, one channel adapter board 19A, one disk adapter board 19B, one adapter board 19C, one cache memory board 19D and one shared memory board 19E, which are the required minimum for driving the disk array device 1, are made to be the basic configuration within the basic board configuration, and each remaining channel adapter board 19A, disk adapter board 19B, adapter board 19C and cache memory board 19D are made to be the expanded configuration in the basic board configuration. And, in the disk array device 1, by disposing the basic configuration and expanded configuration in the upper and lower decks of the logical module case 18, the overlapping of the cables to be respectively drawn from each channel adapter board 19A, each channel adapter board 19B and the adapter board 19C of the upper and lower decks can be prevented while maintaining the performance of conventional models.

Further, with the disk array device 1, when expanding the logical board 19 of the logical module 10 from the basic board configuration, the basic configuration of the basic board configuration described above is made to the basic configuration of the expanded board configuration, and the expanded configuration of the basic board configuration is made to be the expanded configuration of the expanded board configuration. And, by expanding the logical board 19 in the sequence of the basic configuration of the expanded board configuration and the expanded configuration of the expanded basic configuration in the order of upper deck and lower deck of the logical module case 19, or lower deck and upper deck of the logical module case 19, the reduction in cooling efficiency during basic configuration and deterioration in cooling efficiency caused by the expansion of the logical board 19 can be effectively prevented.

Incidentally, as the expansion order of the logical board 19 in the logical module 10, as shown in FIG. 12, the order may be such that the basic configuration and expanded configuration of the basic board configuration are arranged to the left and right of the upper deck or lower deck of the logical module case 18, the basic configuration within the expanded board configuration is thereafter disposed at the lower part or upper part of the basic configuration in the basic board configuration, and the expanded configuration within the expanded board configuration is disposed adjacent thereto.

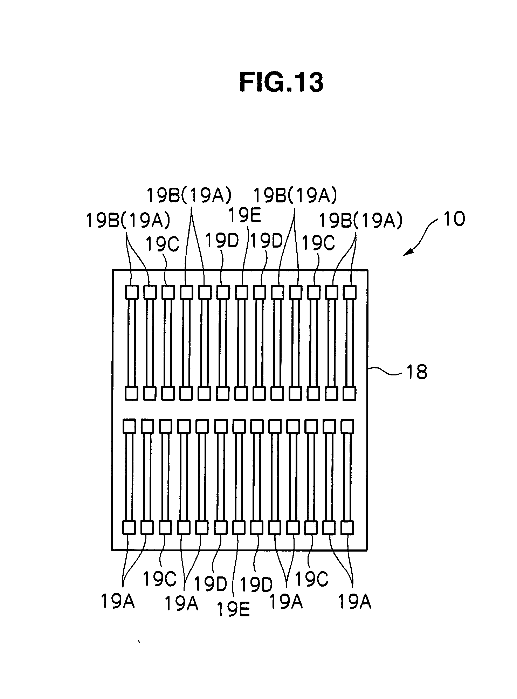

Moreover, as the installation configuration of the logical board 19 in the logical module 10, as shown in FIG. 13, every disk adapter board 19B (or substitute channel adapter board 19A) may be disposed in the upper deck or lower deck, and every channel adapter board 19A may be disposed in the lower deck or upper deck of the logical module case 18.

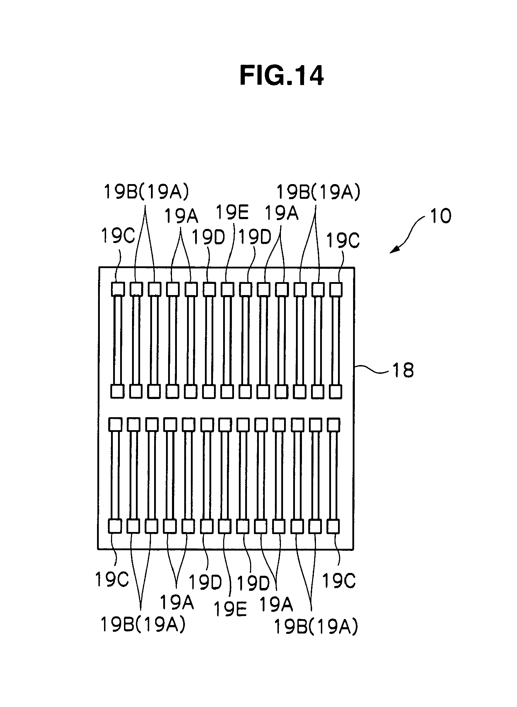

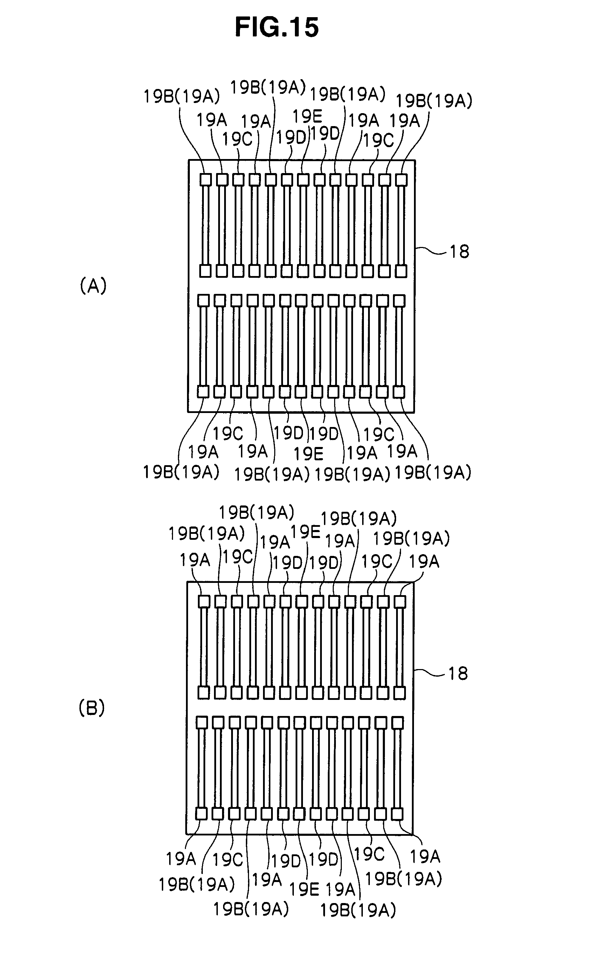

In addition, as the installation configuration of the logical board 19 in the logical module 10, as shown in FIG. 14, the channel adapter board 19A, disk adapter board 19B and adapter board 19C, in which cables are to be drawn from the side edges thereof, may be disposed in the order of the adapter board 19C, disk adapter board 19B and channel adapter board 19A, from the outside toward the inside, regarding either the upper deck or lower deck of the logical module case 18. Further, as shown in FIG. 15, the channel adapter boards 19A may be disposed on the left and right sides of the adapter board 19C (FIG. 15(A)), or the disk adapter boards 19B may be disposed on the left and right sides of the disk adapter board 19B (FIG. 15 (B)).

Incidentally, the logical module case 18 may be configured to be able to install a logical board in its original size; that is, double the size of the logical board 19 in the present embodiment, so that the logical board 19 of the present embodiment and the logical board in its original size can be disposed in combination. In particular, with the cache memory board 19D and shared memory board 19E, since the number of pins of the original logical board and the logical board 19 divided into halves is the same, by making these the size of the original logical board, the number of pins in the overall logical module 10 can be reduced.

### (1-3-3) Mounting Configuration of Logical Board

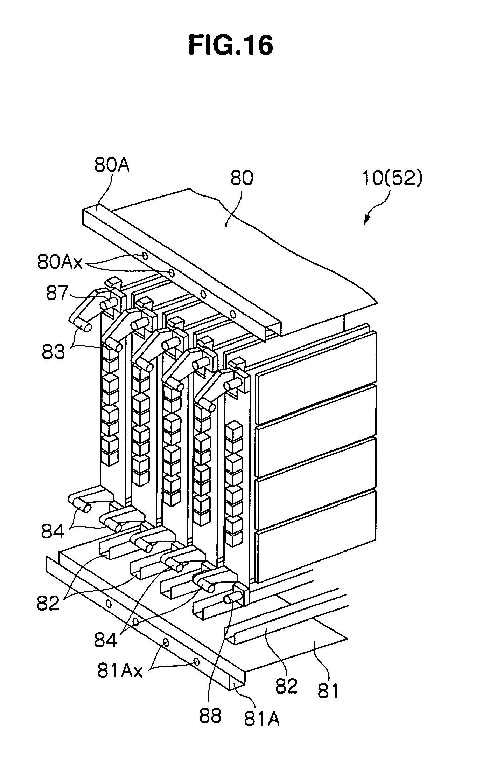

Next, the mounting configuration of the respective logical boards 19 in the cabinet type disk array device 1 and rack type disk array device 40 according to this embodiment is explained. FIG. 16 shows the mounting configuration of the logical board 19 in the logical modules 10, 52 adopted in both the rack type and cabinet type disk array devices 1, 40. In the case of this embodiment, the logical modules 10, 52 are provided with planar guide channels 80, 81 which sandwich the logical board 19 to be mounted from the top and bottom thereof.

U-shaped board guides 82 are mounted on the respective guide channels 80, 81 in correspondence with the mounting position of the logical board 19 and in parallel with the push/pull direction (i.e., front and back direction) of the logical board 19. Each logical board 19 is inserted into the logical modules 10, 52 by fitting the upper side and lower side thereof into the upper side and lower side of the board guides 82 of the respective guide channels 80, 81 of the upper side and lower side of the logical modules 10, 52.

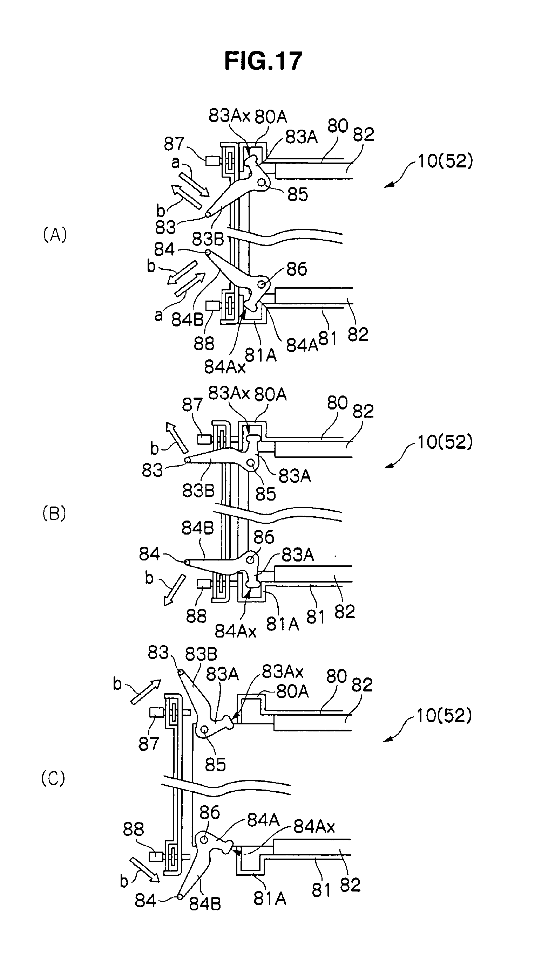

Engagement portions 80A, 81A having a U-shaped cross section provided so as to form a recess in mutually estranging directions are formed on the front end of the respective guide channels 80, 81 in the logical module 10, 52. Further, as shown in FIG. 16 and FIG. 17, push/pull levers 83, 84 are respectively mounted on the upper end and lower end of the side edge on the front side of the logical board 19 rotatably around axis bodies 85, 86. With these push/pull levers 83, 84, the guide channel ends 83A, 84A formed at the end closer to the guide channel 80 are bent in an "L" shape, and flat portions 83AX, 84AX are respectively provided to the tip thereof.

Thereby, in the logical modules 10, 52, by inserting the logical board 19 into the logical modules 10, 52 until the connector not shown disposed at the back face of the logical board 19 and the connector not shown disposed on the backboards 20, 51 (FIG. 2, FIG. 5) come in contact, and thereafter pressing the handles 83B, 84B formed at the end on the opposite side of the guide channel ends 83A, 84A of the push/pull levers 83, 84 in the insertion direction shown with arrow a (FIG. 17(A)), the tip of the guide channel ends 83A, 84A can be pressed against the inner face of the forward direction in the engagement portions 80A, 81A of the guide channels 80, 81, and the principle of leverage can be used to insert the logical board 19 into the logical module cases 18, 57 (FIG. 2, FIG. 5). As a result, the connector provided to the back side of the logical board 19 will engage with the corresponding connector provided to the backboards 20, 51. Thereafter, when the handles 83B, 84B of the push/pull levers 83, 84 are further pressed in the insertion direction, the flat portion 83AX of the guide channel end 83A of the push/pull lever 83 will be pressure welded to the inner face of the forward direction in the engagement portions 80A, 81A of the guide channels 80, 81, and the logical board 19 and backboards 20, 52 will become locked in a connected state.

Incidentally, screws 87, 88 are respectively provided to the upper end and lower end of the side edge on the front side of the respective logical boards 19, and, by screwing these screws 87, 88 into corresponding screw holes 80AX, 81AX provided to the front side of the engagement portions 80A, 81A of the corresponding guide channels 80, 81, the logical board 19 can be fixed in a state of being connected with the backboards 20, 52.

Meanwhile, with the logical modules 10, 52, after removing the respective screws 87, 88 from the corresponding screw holes 80AX, 81AX of the guide channels 80, 81, when the handles 83B, 84B of the push/pull levers 83, 84 are pulled in the removal direction shown with arrow b (FIG. 17(A) to (C)), pursuant to the rotation of the push/pull levers 83, 84, the flat portions 83AX, 84AX of the guide channel ends 83A, 84A of the push/pull levers 83, 84 will become estranged from the inner face of the forward direction in the engagement portions 80A, 81A of the guide channels 80, 81, and the lock will be released thereby (FIG. 17(A)). Thereafter, when the handles 83A, 84A of the push/pull levers 83, 84 are further pulled in the removal direction, this time, the guide channel ends 83A, 84A of the push/pull levers 83, 84 are pressed against the inner face of the backward direction in the engagement portion 80A, 81A of the guide channels 80, 81 (FIG. 17(B)), and the principle of leverage can be used to remove the logical board 19 from the logical modules 10, 52. As a result, the connector at the back side of the logical board 19 will disengage from the corresponding connector of the backboards 20, 52. Thereby, the logical board 19 can then be manually removed from the logical modules 10, 52 (FIG. 17(C)).

### (1-4) Effect of Present Embodiment

As described above, with the rack type and cabinet type disk array devices 1, 40 according to the present embodiment, since the logical boards 19 to be housed in the logical modules 10, 52 are formed by being divided into half the size of conventional logical boards, the logical boards 19 can be mutually used in both the rack type and cabinet type disk array devices. Accordingly, when manufacturing both the rack type and cabinet type disk array devices 1, 40, in comparison to a case of separately manufacturing the logical board 19 for the rack type disk array device and cabinet type disk array device, the manufacture load and management load of the logical board 19 can be reduced dramatically.

### (2) Second Embodiment

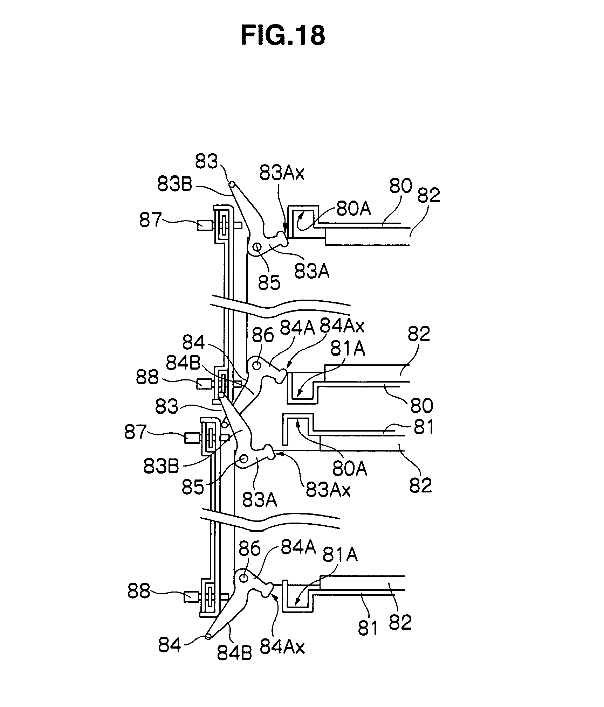

In the case of the cabinet type disk array device 1 according to the first embodiment described above, since conventional type push/pull levers were used as the push/pull levers 83, 84 of the respective logical boards 19, upon inserting and removing the logical board 19 mounted on the upper deck and lower deck of the logical module 18 in the logical module 10, as shown in FIG. 18, the push/pull lever 84 at the lower side in the upper deck logical board 19 and the push/pull lever 83 at the upper side in the lower deck logical board 19 will interfere with each other.

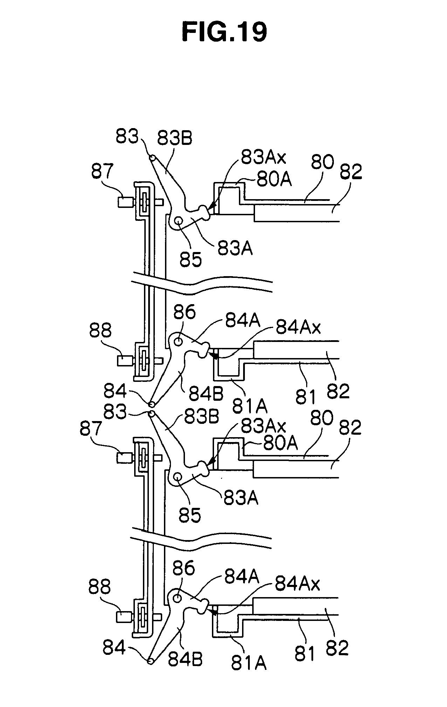

As a method for resolving this problem, as shown in FIG. 19, in order to prevent the push/pull lever 84 at the lower side of the logical board 19 to be mounted on the upper deck of the logical module case 18 and the push/pull lever 83 at the upper side of the logical board 19 to be mounted on the lower deck of the logical module case 18 from interfering with each other, considered may be a method of separating the mounting positions of these logical boards 19 in the logical module case 18. Nevertheless, when this method is adopted, there is a problem in that the logical module 10 must be enlarged, which will ultimately result in the enlargement of the disk array device 1.

As a method of resolving the foregoing problem while avoiding the enlargement of the logical module 10, considered may be a method of miniaturizing these logical boards 19 (further reducing the height of the logical board 19) until the push/pull levers 83, 84 of the respective logical boards 19 of the upper deck and lower deck in the logical module case 18 no longer interfere with each other. Nevertheless, when this method is adopted, since the board area of the logical board 19 will become significantly less than half the board area of conventional models, even the use of two logical boards 19 will not be able to realize the high density mounting of the logical board 19 as in conventional models and, as a result, there is a problem in that this will deteriorate the performance of the disk array device 1.

Thus, in the cabinet type disk array device 1 according to the second embodiment, in order to overcome the foregoing problem, one feature thereof is that the configuration of the push/pull levers in the logical board 19 has been devised.

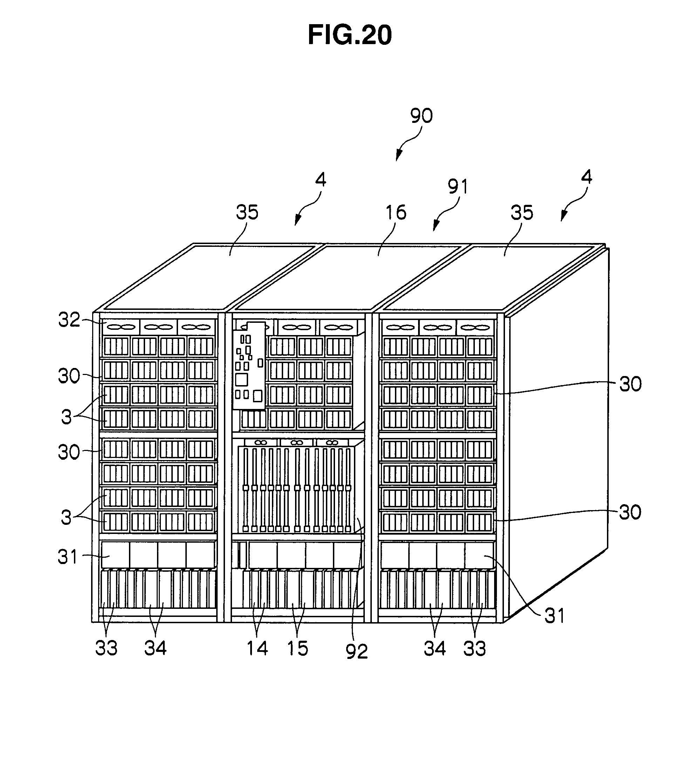

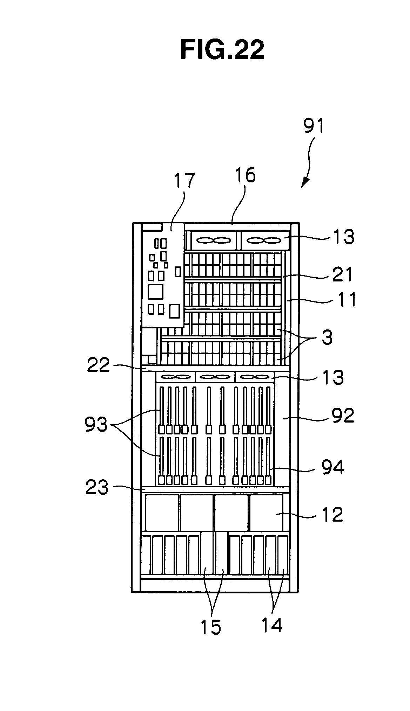

FIG. 20 to FIG. 22, which are given the same reference numerals in the components corresponding to FIG. 1 to FIG. 3, show the cabinet type disk array device 90 according to the second embodiment. This disk array device 90 is configured the same as the cabinet type disk array device 1 according to the foregoing first embodiment described with reference to FIG. 1 to FIG. 3 other than that the mounting configuration of the respective logical boards 93 in the logical module 92 of the controller 91 is different.

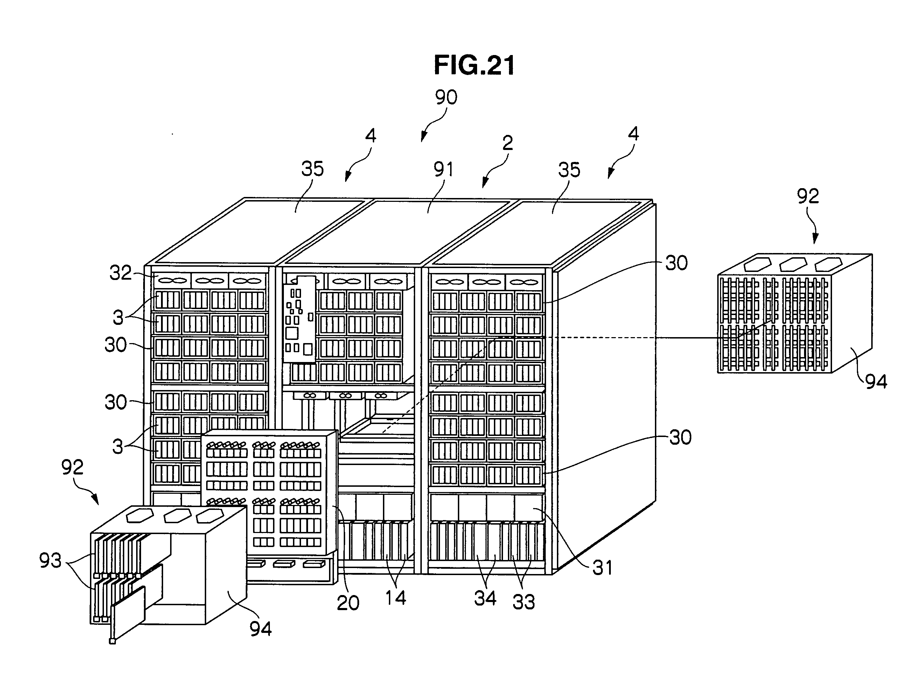

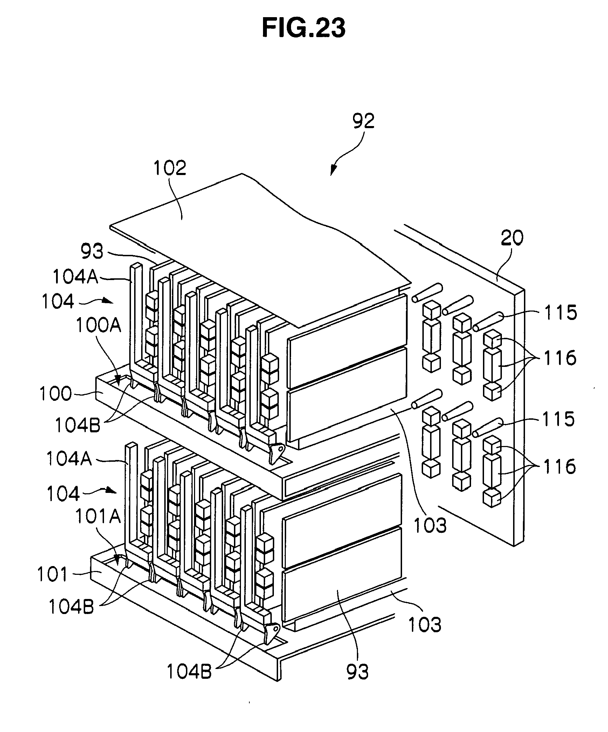

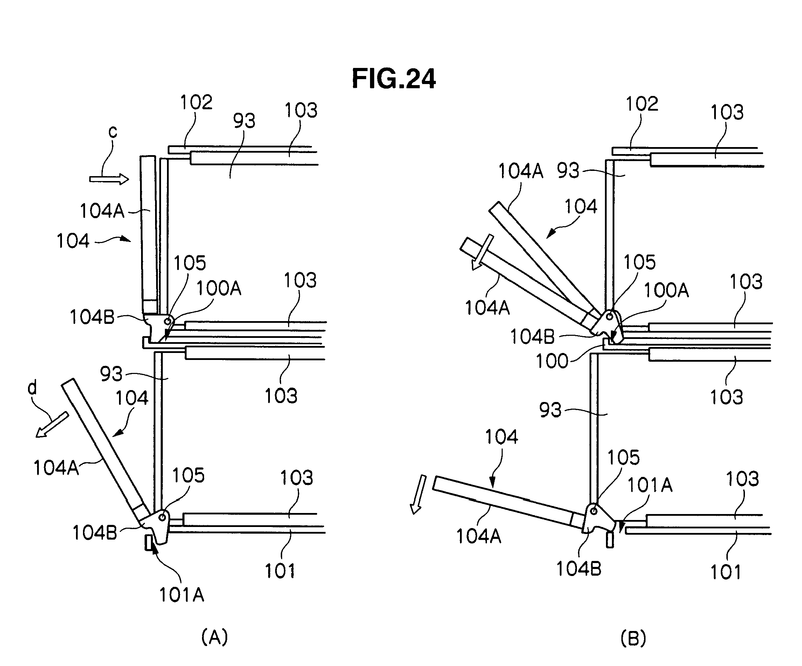

In actuality, in the case of the cabinet type disk array device 90 according to the second embodiment, as shown in FIG. 23 and FIG. 24, base plates 100, 101 respectively forming the bottom face of the upper deck portion and the bottom face of the lower deck portion for mounting the logical board 93 are provided to the logical module case 94 in the logical module 92. Further, provided to the logical module case 94 (FIG. 21) are planar guide channels 102 for sandwiching the logical board 93 mounted on the upper deck portion together with the base plate 100 from the top and bottom directions thereof.

A U-shaped board guide 103 is provided to the lower face of these guide channels 102, the upper face and lower face of the base plate 100 forming the bottom face of the upper deck, and the upper face of the base plate 101 forming the bottom face of the lower deck in correspondence with the respective mounting positions of the respective logical board 93, and in parallel with the push/pull direction (i.e., front and back direction) of the logical board 93. Each of the logical boards 93 is inserted into the logical module case 94 by the upper side and lower side thereof being fitted into the board guide 103 provided to the lower face of these guide channels 102 and the board guide 103 formed on the upper face of the base plate 100 forming the bottom face of the upper deck portion, and the upper side and lower side thereof being fitted into the board guide 103 formed on the lower face of the base plate 100 and the board guide 103 formed on the upper face of the base plate 101 forming the bottom face of the lower deck portion.

Further, at the front end of the respective base plates 100, 101 forming the bottom face of the upper deck portion and the bottom face of the lower deck portion of the logical module case 94, provided are linear grooves 100A, 101A along the edge portion of these base plates 100, 101, respectively. Moreover, a push/pull lever 104 to be operated upon inserting and removing the logical board 93 to and from the logical module case 94 is provided only to one corner at the lower end thereof at the front face (this corresponds to the back end of the insertion direction of the logical board 93 into the) of the respective logical boards 93.

The push/pull lever 104 is configured from a rod-shaped handle 104A having roughly the same height as the logical board 93 (length of the direction perpendicular to the insertion direction of the logical board 93 into the logical module case 94), and an engagement portion 104B provided to the lower end of this handle 104A. The push/pull lever 104 is provided rotatably in the front and back directions by the engagement portion 104A being axially supported by an axis body 105 standing upright from the lower end of the forward direction of the logical board 93 in a state of being housed in the logical module case 94.

As evident from FIG. 24, the engagement portion 104B is formed in a rounded triangular shape as a whole, and when the push/pull lever 104 is raised in the insertion direction as shown with arrow c in FIG. 24(A), the lower end of the engagement portion 104B will fit into the groove 100A of the base plate 100 forming the bottom face of the upper deck portion in the logical module case 94 or the groove 101A of the base plate 101 forming the bottom face of the lower deck portion in the logical module case 94.

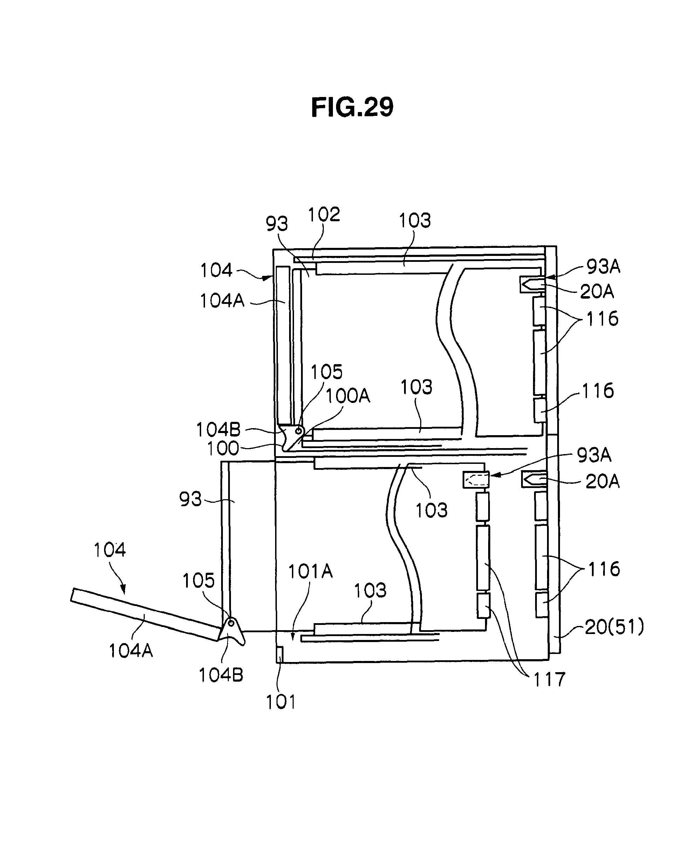

Thereby, with this disk array device 90, as shown in the lower deck of FIG. 24(B), by pressing the logical board 93 into the logical module case 94 along the board guide 103 in a state where the push/pull lever 104 is pulled down in the removal direction shown with arrow d until it becomes approximately horizontal, and thereafter raising the handle 104A of the push/pull lever 104 until it becomes vertical, the principle of leverage can be used to insert the logical board 93 into the logical module case 94 by the tip of the engagement portion 104B being pressed against the inner face of the forward direction in the grooves 100A, 101A of the corresponding base plates 100, 101. As a result, the connector 117 (c.f. FIG. 29) provided to the back side of the logical board 93 will engage with the corresponding connector 116 (c.f. FIG. 29) provided to the backboard 20 (FIG. 21) (upper deck of FIG. 24(A)).

Further, with the logical module 92, when the handle 104 of the push/pull lever 104 is thereafter pulled down in the removal direction from the foregoing state, the principle of leverage can be used to remove the logical board 93 from the logical module case 94 by the tip of the engagement portion 104B being pressed against the inner face of the backward direction in the grooves 100A, 101A of the corresponding base plates 100, 101 (lower deck of FIG. 24(A) and FIG. 24(B)). As a result, the connector 117 (FIG. 29) at the back face of the logical board 93 will be disengaged from the corresponding connector 116 (FIG. 29) of the backboard 20 (lower deck of FIG. 24(B)). Accordingly, by thereafter pulling down the push/pull lever 104 until the handle 104A becomes horizontal, the logical board 93 can be easily removed from the logical module case 94.

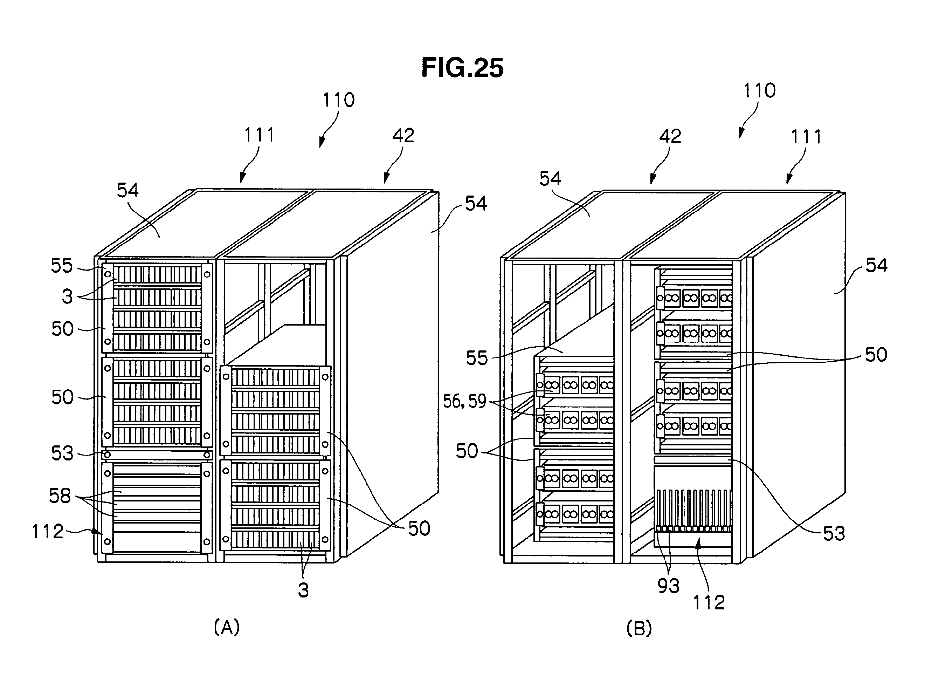

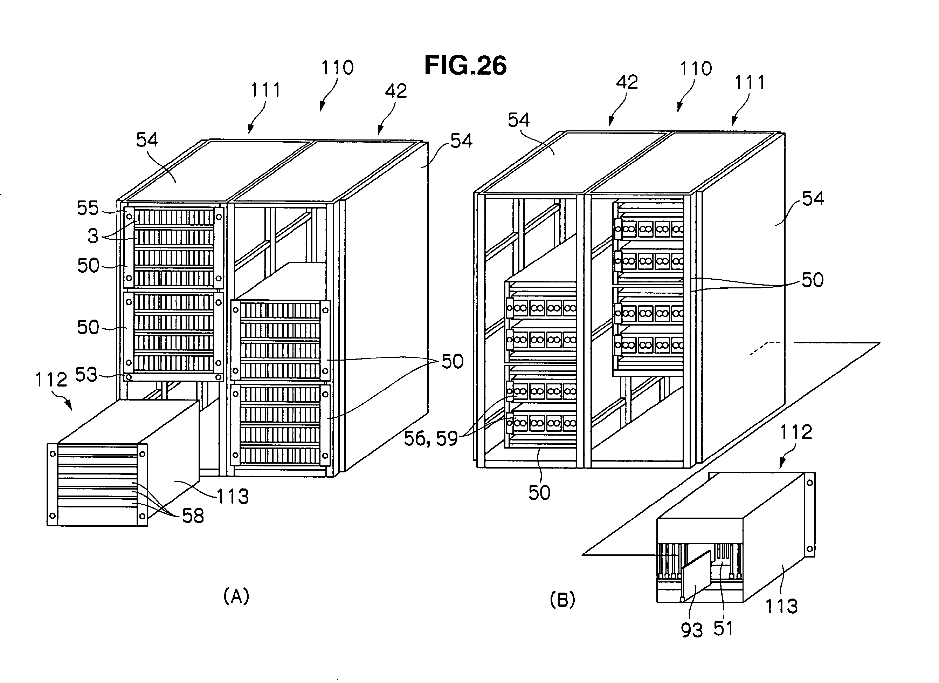

Meanwhile, FIG. 25 and FIG. 26, which are given the same reference numerals in the components corresponding to FIG. 4 and FIG. 5, show the rack type disk array device 110 according to the second embodiment. FIG. 25(A) and FIG. 26(A) are front views of the disk array device 40, and FIG. 25(B) and FIG. 26(B) are rear views of the disk array device 40.

This disk array device 110 is configured the same as the rack type disk array device 40 according to the foregoing first embodiment described with reference to FIG. 4 and FIG. 5 other than that the mounting configuration of the respective logical boards 93 in the logical module 112 of the basic configuration unit 111 is different.

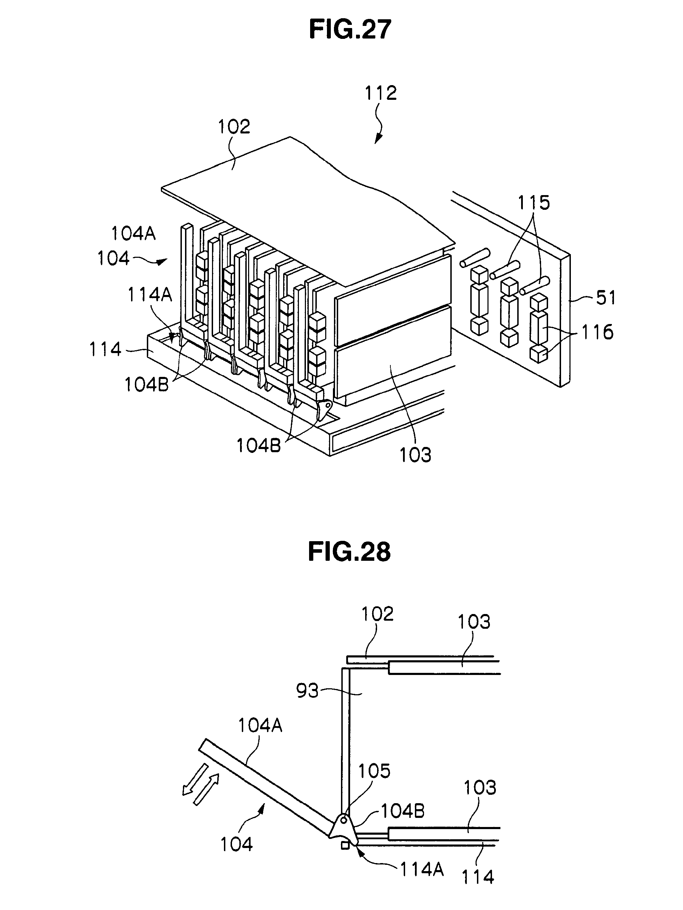

In actuality, in the case of the rack type disk array device 110 according to the second embodiment, as shown in FIG. 27 and FIG. 28 which are given the same reference numerals in the components corresponding to FIG. 23 and FIG. 24, a base plate 114 forming the bottom face of the portion for mounting the logical board 93 is provided to the logical module case 113 (FIG. 26) in the logical module 112, and a linear groove 114A is formed along the edge of the base plate 114 at the front end thereof. Further, the push/pull lever 104 described above with reference to FIG. 23 and FIG. 24 is provided to the front face in the respective logical boards 93, and each of the logical boards 93 can be inserted into and removed from the logical module case 113 as with the foregoing cabinet type disk array device 90.

Thereby, with the rack type and cabinet type disk array devices 90, 110 according to the present embodiment, since the push/pull levers 104 of the logical boards 93 in the logical modules 92, 112 have a one-point support constitution of being supported at the lower front end of the logical board 93, particularly with the logical module 92 of the cabinet type disk array device 90, even when the push/pull levers 104 of the logical boards 93 of the upper deck and the lower deck immediately therebeneath of the logical case 94 is pulled down to become horizontal as in the lower deck of FIG. 24(B) upon removing the logical board 93 from the logical module case 94, the push/pull levers 104 of these logical boards 93 will not interfere with each other.

Accordingly, there is no need to separate the mounting positions of the logical boards 93 of the upper deck and lower deck in the logical module 92 in order to avoid the interference of the push/pull levers 104, and there is also no need to reduce the height of the logical boards 93 to avoid such interference. Thus, with the disk array device 90 according to the second embodiment, for instance, two logical boards 93 of the upper deck and lower deck will be able to realize the high density mounting of the logical board as with conventional models, and the deterioration in performance of the disk array device 90 caused by the reduction in area of the logical board 93, and the enlargement of the disk array device 90 caused by separating the mounting positions of the logical boards 93 of the upper deck and lower deck in the logical module 92 can be effectively prevented.

Incidentally, in the case of this embodiment, as shown in FIG. 29, a guiding pin hole 93A of a prescribed size is provided to the upper end of the back face of the respective logical boards 93, and a board guiding pin 115A of a size capable of engaging with the guiding pin hole 93A is implanted to a prescribed position on the opposing backboard 20. Incidentally, although FIG. 29 shows the logical module 92 in the cabinet type disk array device 90, the logical module 112 in the rack type disk array device 110 is configured the same.

Thereby, with the disk array devices 90, 110 according to the second embodiment, when raising the push/pull lever 104 or lowering the push/pull lever 104, damage to the connector 117 at the back face of the logical board 93 and the connector 116 of the backboards 20, 51 connected thereto resulting from unnecessary vertical force being applied thereon as a result of the counteraction can be effectively prevented, and inconveniences caused with the existence of only one push/pull lever 104 can be prevented beforehand and effectively.

### (3) Third Embodiment

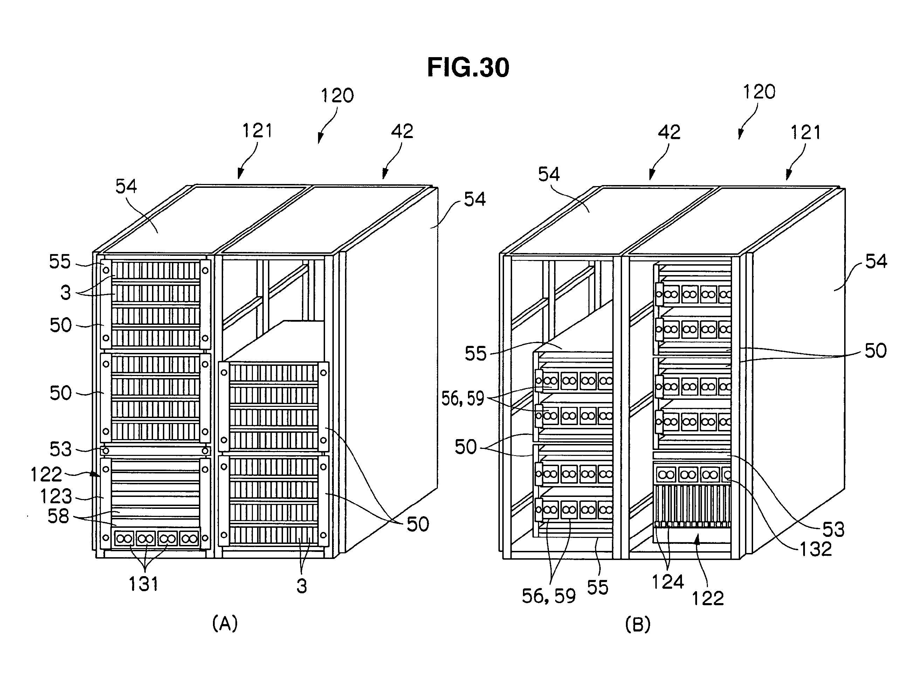

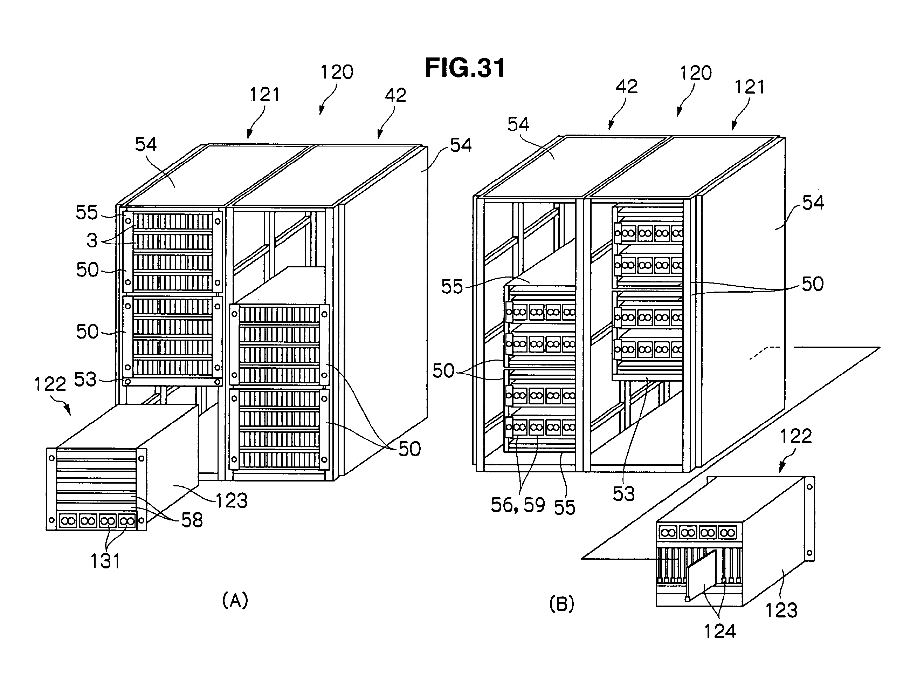

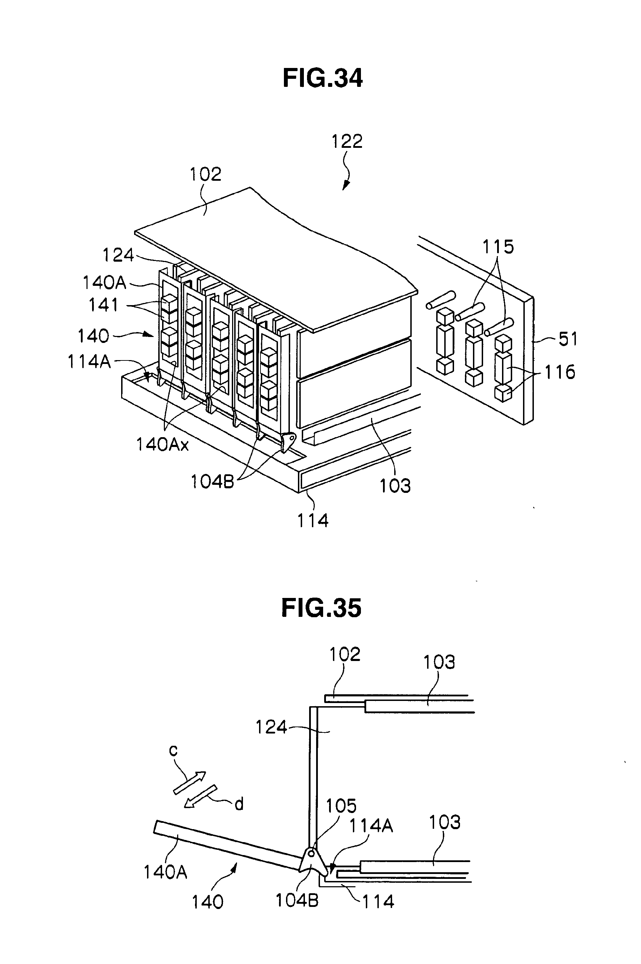

FIG. 30 and FIG. 31, which are given the same reference numerals in the components corresponding to FIG. 23 and FIG. 24, show the rack type disk array device 120 according to the third embodiment. FIG. 34(A) and FIG. 35(A) are front views of the disk array device 120, FIG. 30(B) and FIG. 31(B) are rear views of the disk array device 120.

The rack type disk array device 120 according to the third embodiment is configured the same as the disk array device 110 (FIG. 23 and FIG. 24) according to the second embodiment other than that the a Z-shaped cooling structure is adopted as the cooling structure in the logical module 122 of the basic configuration unit 121, and that the configuration of the push/pull lever 140 (FIG. 34) provided to the logical board 124 to be mounted on the logical module case 123 is different.

Here, prior to explaining the cooling structure in the rack type disk array device 120 according to the third embodiment, the cooling structure of the controller 91 (FIG. 20 to FIG. 22) in the cabinet type disk array device 90 (FIG. 20 to FIG. 22) according to the second embodiment is explained.

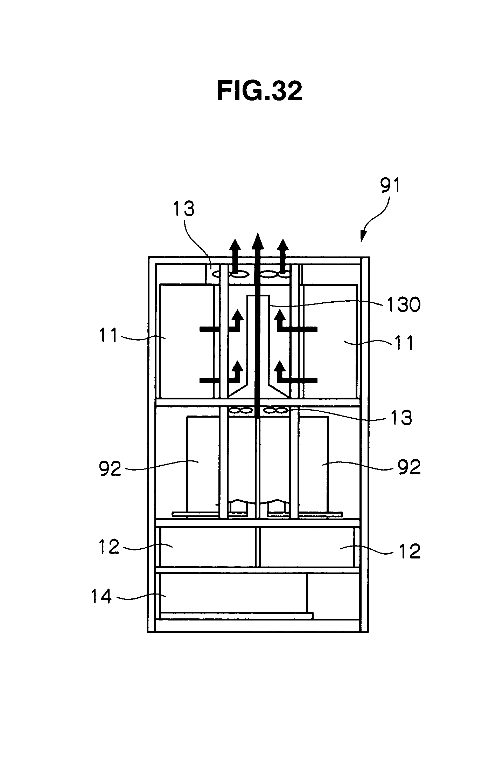

FIG. 32 shows the cooling structure in the controller 91 of the cabinet type disk array device 90 according to the second embodiment. The arrows in FIG. 32 represent the flow of cooling air. As shown in FIG. 32, in the controller 91, a cooling fan 13 is disposed above the disk drive module 11, and, inside the controller 91, an air duct 130 is provided by being sandwiched between the disk drive module 11 disposed at the front side and the disk drive module 11 disposed at the back side.

Thereby, with the controller 91, the heat generated in the logical module 92 can be absorbed with the cooling fan 13 via the air duct 130. Thus, the disturbance of the flow of cooling air caused by the convergence of the cooling air absorbed with the cooling fan 13 via the gap of the disk drive module 11 and the cooling air absorbed with the cooling fan 13 via the air duct 130 can be effectively prevented, and the deterioration of the cooling efficiency caused by such disturbance of the flow of cooling air can be effectively prevented.

At the same time, in the case of the rack type disk array device 120 according to the third embodiment, the disk drive module 50, control module 53 and logical module 122 occupying the greater part of the disk array device 120 as described above are mounted on the rack frame 54 only from the front face side, which results in a front face maintenance configuration, and, since these modules 50, 53, 122 reach close to the back side of the rack frame 54, the cooling structure using the air duct 130 as described above cannot be adopted.

Further, if the cooling structure merely flows cooling air from the front face to the back face, there is a problem in that the backboard 51 (FIG. 5) disposed facing the front face at the back end of the logical module case 123 in the logical module 122 will obstruct the flow of cooling air. As a method for overcoming this problem, for instance, although the provision of an opening for flowing the cooling air to the backboard 51 may be considered, there is no space for providing an opening in the backboard 51 on which high density wiring patters are formed, and this is not realistic.

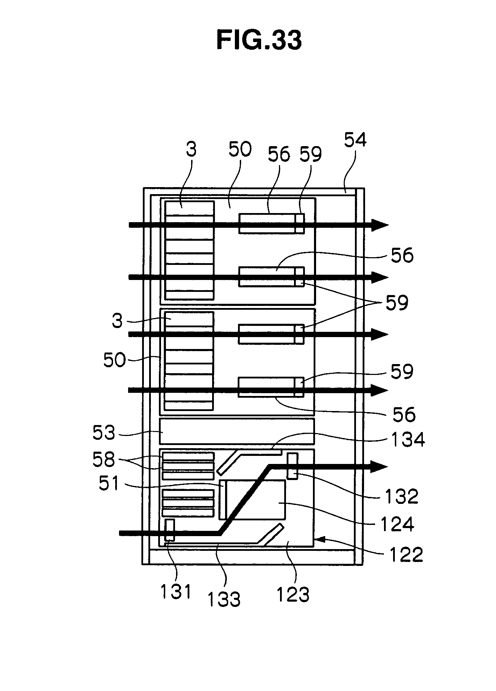

Thus, with the rack type disk array device 120 according to this embodiment, as shown in FIG. 33, with respect to the portion of the disk drive module 50, the cooling fan 59 provided to the back end of the power source unit 56 for flowing cooling air from the front side to the back side is used to absorb heat, and, with respect to the logical module 122, as a result of providing an intake cooling fan 131 to the lower side of the front face and providing an exhaust cooling fan 132 to the upper side of the back face, cooling air will flow coercively from the lower front face to the upper back face of the logical module 122.

Further, with this disk array device 120, in addition to providing a first shield 133 bent such that the back end thereof is raised upward to the inner bottom face of the logical module case 123 of the logical module 122, a second shield 134 bent such that the front side thereof is lowered downward is provided to the inner top face of the logical module case 123. Thereby, the flow of cooling air will be guided by these first and second shields 133, 134, and cooling air can be flowed in a Z shape more stably.

Moreover, with this disk array device 120, as shown in FIG. 34 and FIG. 35, which are given the same reference numerals in the components corresponding to FIG. 27 and FIG. 28, the handle 140A of the push/pull lever 140 disposed at the front side of the respective logical boards 124 is formed in a U shape having roughly the same height as the logical board 93. Thereby, with this disk array device 120, the push/pull lever 140 of the respective logical boards 124 mounted on the logical module case 123 can be used for covering the opening end of the logical module case 124. Accordingly, with this disk array device 120, the cooling air discharged from the pull-type cooling fan 132 of the logical module 122 can be prevented from being absorbed from the opening end side of the logical module case 123, and cooling can be flowed in a Z shape more stably.

Incidentally, as shown in FIG. 34, an opening 140AX is formed at the front center of the handle 140A of the push/pull lever 140, and the connection ports 141 respectively formed on the sub edge side of the respective logical boards 124 can be exposed via this opening 140AX. Further, a helical groove 140AY for communication with the opening 140AX is provided to a prescribed position of the handle 140A of the push/pull lever 140. Accordingly, when raising or lowering the handle 140A, the push/pull lever 140 can be raised or lowered without having to remove the cables from the connection port 141 by moving the cables connected to the connection port 141 of the logical board 124 through the opening 140AX via such helical groove, or moving the cables so that they do not pass through the opening 140AX.

As described above, with the disk array device according to the present embodiment, by adopting the Z-shaped cooling structure in the logical module 122, the logical module 122 can be cooled efficiently without being interfered by the backboard 51.

### (4) Other Embodiments

In the foregoing first to third embodiments, although a case was explained where a logical board used in conventional models was functionally divided in halves, the present invention is not limited thereto and, for example, when there are three or more channel adapters 60 (FIG. 6) or disk adapters 64 (FIG. 6) formed in the logical board used in conventional models, the logical board may be divided into three or more sections.

In the foregoing case, the logical module cases 18, 57, 94, 113, 123 may be formed so that they can house each of these divided logical boards so as to be arranged in a direction perpendicular to the insertion direction of these logical boards into the logical module cases 18, 57, 94, 113, 123. Further, each of these logical boards in the foregoing case may be formed to have a board area of a size that is approximately equal to the size of the number of partitions of the board area of the divided original board. However, the size of these divided logical boards may be of other sizes.

Further, in the foregoing third embodiment, although a case was explained where the intake cooling fan 131 was provided to the lower part of the front side and an exhaust cooling fan 132 was provided to the upper part of the back side of the logical module case 123, the present invention is not limited thereto, and an exhaust cooling fan may be provided to the lower part of the front side and an intake cooling fan may be provided to the upper part of the back side of the logical module case 123, or an intake or exhaust cooling may be provided to the upper part of the front side and an exhaust or intake cooling fan may be provided to the lower part of the back side of the logical module case 123. In other words, it will suffice so as long as the exhaust and intake cooling fans disposed in front of and behind the logical module case 123 are arranged on both sides so as to sandwich the logical board 124 housed in the logical module case 123 in a direction that is perpendicular to both the insertion direction of the logical board 124 into the logical module case 123 and the thickness direction of the logical board 124.

Moreover, in the foregoing embodiment, although a case was explained where the first and second shields 133, 134 having the shape described with reference to FIG. 33 were used as the guide material for guiding the cooling air to flow from the push-type cooling fan 131 to the pull-type cooling fan 132, the present invention is not limited thereto, and, for instance, a Z-shaped duct may also be used.

Furthermore, in the foregoing third embodiment, although a case was explained where the push/pull lever 140 is configured to be in the shape described with reference to FIG. 34 only in the rack type disk array device 120, the present invention is not limited thereto, and the push/pull lever of a cabinet type disk array device may also be configured as illustrated in FIG. 34.

The present invention may be applied to a rack type disk array device and a cabinet type disk array device.

## Claims

1. A disk array device, comprising:
a plurality of second logical boards constituted by functionally dividing in plural a first logical board having formed thereon a circuit for controlling the input and output of data; and
a case for housing each of said second logical boards;
wherein said case houses each of said second logical boards constituted by functionally dividing said first logical board so as to be arranged in a direction perpendicular to the insertion direction of said second logical boards into said case and the thickness direction of said second logical boards.

2. The disk array device according to claim 1, wherein each of said second logical boards is formed in a board area of a size approximately equal to the size of the number of partitions in which the board area of said first logical board was divided.

3. The disk array device according to claim 1 or claim 2, further comprising a push/pull lever provided only to one corner at the back end side of said second logical board in relation to its insertion direction into said case and which is to be operated upon inserting and removing said second logical board to and from said case.

4. The disk array device according to claim 3, wherein the length of a handle of said push/pull lever to be operated upon inserting and removing said second logical board to and from said case is formed in a size that is approximately the same as the length perpendicular to said second logical board in relation to its insertion direction into said case.

5. The disk array device according to claim 4, wherein said handle of said push/pull lever is formed so as to cover the back end side of said second logical board in relation to its insertion direction into said case.

6. The disk array device according to claim 5, wherein one or a plurality of connection ports is formed at the back end side of said second logical board in relation to its insertion direction into said case, and an opening is formed in said handle of said push/pull lever so as to avoid said connection port.

7. The disk array device according to claim 6, wherein a helical groove in communication with said opening is formed in said handle of said push/pull lever.

8. A disk array device, comprising:
a logical board having formed thereon a circuit for controlling the input and output of data;
a case for housing each of said logical boards so as to be arranged in the thickness direction of said logical board;
a first cooling fan for exhaust or intake provided to the back end of the insertion direction of said logical board farther than the mounting position of said logical board in said case; and
a second cooling fan for intake or exhaust provided to the front end of the insertion direction of said logical board farther than the mounting position of said logical board in said case;
wherein said first and second cooling fans are disposed on both ends of a direction perpendicular to both the insertion direction of said logical board into said case and the thickness direction of said logical board so as to sandwich said logical board housed in said case.

9. The disk array device according to claim 8, further comprising a guide member for guiding cooling air from said first cooling fan toward said second cooling fan, or from said second cooling fan toward said first cooling fan.

10. The disk array device according to claim 8 or claim 9, further comprising a cover provided so as to cover the back end side of said logical board in relation to its insertion direction into said case.

11. The disk array device according to claim 10, wherein said cover is a handle provided only to one corner at the back end side of said logical board in relation to its insertion direction into said case and which is to be operated upon inserting and removing said logical board to and from said case.

12. The disk array device according to claim 10 or claim 11, wherein one or a plurality of connection ports is formed at the back end side of said logical board in relation to its insertion direction into said case, and an opening is formed in said cover so as to avoid said connection port.

13. A disk array device, comprising:
a plurality of second logical boards constituted by functionally dividing in plural a first logical board having formed thereon a circuit for controlling the input and output of data;
a case for housing each of said second logical boards so as to be arranged in the thickness direction of said second logical board;
a push/pull lever provided only to one corner at the back end side of said second logical board in relation to its insertion direction into said case and which is to be operated upon inserting and removing said second logical board to and from said case;
a first cooling fan for exhaust or intake provided to the back end of the insertion direction of said second logical board farther than the mounting position of said logical board in said case; and
a second cooling fan for intake or exhaust provided to the front end of the insertion direction of said second logical board farther than the mounting position of said logical board in said case;
wherein said first and second cooling fans are disposed on both ends of a direction perpendicular to both the insertion direction of said second logical board into said case and the thickness direction of said second logical board so as to sandwich said logical board housed in said case.
